# EUROPEAN PATENT SPECIFICATION

(11) **EP 3 730 574 B1**
(45) Date of publication and mention of the grant of the patent: **30.08.2023**
(21) Application number: 18891167.1
(22) Date of filing: 05.10.2018
(51) Int. Cl.: C09K 5/04, F25B 1/00

(54) **COMPOSITION COMPRISING REFRIGERANT, USE THEREOF, REFRIGERATING MACHINE HAVING SAME, AND METHOD FOR OPERATING SAID REFRIGERATING MACHINE**
ZUSAMMENSETZUNG MIT KÄLTEMITTEL, VERWENDUNG DAVON, KÄLTEMASCHINE DAMIT UND VERFAHREN ZUM BETREIBEN DER KÄLTEMASCHINE
COMPOSITION COMPRENANT UN FLUIDE FRIGORIGÈNE, UTILISATION CORRESPONDANTE, MACHINE DE RÉFRIGÉRATION LA COMPRENANT ET PROCÉDÉ DE FONCTIONNEMENT DE LADITE MACHINE DE RÉFRIGÉRATION

(30) Priority: 18.12.2017 JP 2017242185
(43) Date of publication of application: 28.10.2020
(73) Proprietor: DAIKIN INDUSTRIES, LTD., Osaka-Shi, Osaka 530-0001 (JP)
(72) Inventor: ITANO, Mitsushi, Osaka-shi, Osaka 530-001 (JP); KARUBE, Daisuke, Osaka-shi, Osaka 530-0001 (JP); YOTSUMOTO, Yuuki, Osaka-shi, Osaka 530-0001 (JP); TAKAHASHI, Kazuhiro, Osaka-shi, Osaka 530-0001 (JP); OHKUBO, Shun, Osaka-shi, Osaka 530-0001 (JP)
(74) Representative: Hoffmann Eitle
(86) International application number: PCT/JP2018/037483
(87) International publication number: WO 2019/123782

(56) References cited:
- WO-A1-2015/115252
- WO-A1-2015/141678
- WO-A1-2015/186557
- WO-A1-2015/186670
- US-A1- 2016 340 565
- US-A1- 2017 002 245

## Description

### Technical Field

The present disclosure relates to a composition comprising a refrigerant, use of the composition, a refrigerating machine having the composition, and a method for operating the refrigerating machine.

### Background Art

R410A is currently used as an air conditioning refrigerant for home air conditioners etc. R410A is a two-component mixed refrigerant of difluoromethane (CH₂F₂: HFC-32 or R32) and pentafluoroethane (C₂HF₅: HFC-125 or R125), and is a pseudo-azeotropic composition.

However, the global warming potential (GWP) of R410A is 2088. Due to growing concerns about global warming, R32, which has a GWP of 675, has been increasingly used.

For this reason, various low-GWP mixed refrigerants that can replace R410A have been proposed (WO 2015/141678).

US 2016/340565 discloses a working fluid for heat cycle, which contains trifluoroethylene (HFO-1123) and difluoroethylene (HFO-1132), wherein preferably the proportion of the content of difluoroethylene is < 1.5 mass %, preferably ≤ 0.5 mass %, based on the working fluid.

US 2017/002245 relates to a working fluid for heat cycle, which contains HFO-1123 and HFO-1132, preferably in a total amount of 20-100 mass %,based on the entire working fluid, with HFO-1123 being 57-90 mass% and HFO-1132 being 10-43 mass%.

### Summary of Invention

### Technical Problem

The present inventors performed independent examination, and conceived of the idea that no prior art had developed refrigerant compositions having three types of performance, i.e., a refrigerating capacity (also referred to as "cooling capacity" or "capacity") and a coefficient of performance (COP) that are equivalent to those of R410A, and a sufficiently low GWP. An object of the present disclosure is to solve this unique problem.

### Solution to Problem

The present invention provides a composition comprising a refrigerant, wherein the refrigerant comprises trans-1,2-difluoroethylene (HFO-1132(E)), trifluoroethylene (HFO-1123), and 2,3,3,3-tetrafluoro-1-propene (R1234yf) in such a mixing ratio that, when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments GI, IA, AA', A'B, BD, DC', C'C, and CG that connect the following 8 points:
point G (72.0, 28.0, 0.0),
point I (72.0, 0.0, 28.0),
point A (68.6, 0.0, 31.4),
point A' (30.6, 30.0, 39.4),
point B (0.0, 58.7, 41.3),
point D (0.0, 80.4, 19.6),
point C' (19.5, 70.5, 10.0), and
point C (32.9, 67.1, 0.0),
or on the above line segments (excluding the points on the line segments IA, BD, and CG);
the line segment AA' is represented by coordinates (x, 0.0016x²-0.9473x+57.497, -0.0016x²-0.0527x+42.503),
the line segment A'B is represented by coordinates (x, 0.0029x²-1.0268x+58.7, -0.0029x²+0.0268x+41.3),
the line segment DC' is represented by coordinates (x, 0.0082x²-0.6671x+80.4, -0.0082x²-0.3329x+19.6),
the line segment C'C is represented by coordinates (x, 0.0067x²-0.6034x+79.729, -0.0067x²-0.3966x+20.271), and
the line segments GI, IA, BD, and CG are straight lines.

Further, the invention provides (i) the use of the present composition as an alternative refrigerant for R410A, (ii) a refrigerating machine comprising the present composition as a working fluid and (iii) a method for operating a refrigerating machine, comprising circulating the present composition as a working fluid in a refrigerating machine.

Preferred embodiments of the present invention are as defined in the appended dependent claims and/or in the following detailed description.

### Advantageous Effects of Invention

The refrigerant of the present composition (also referred to as "the present refrigerant") has three types of performance, i.e., a refrigerating capacity and a coefficient of performance that are equivalent to those of R410A, and a sufficiently low GWP.

### Brief Description of Drawing

Fig. 1 is a schematic view of an apparatus used in a flammability test.
Fig. 2 is a diagram showing points A to T and line segments that connect these points in a ternary composition diagram in which the sum of HFO-1132(E), HFO-1123, and R1234yf is 100 mass%.

### Description of Embodiments

The present inventors conducted intensive study to solve the above problem, and consequently found that a mixed refrigerant comprising trans-1,2-difluoroethylene (HFO-1132(E)), trifluoroethylene (HFO-1123), and 2,3,3,3-tetrafluoro-1-propene (R1234yf) in specified mixing ratios has the above properties.

The present disclosure has been completed as a result of further research based on this finding. The present disclosure includes the following embodiments.

### Definition of Terms

In the present specification, the following definitions apply.

The term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Examples of non-fluorocarbon compounds include propane (R290), propylene (R1270), butane (R600), isobutane (R600a), carbon dioxide (R744) and ammonia (R717).

The phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. Herein, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

When the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

The term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

A refrigerant having a "WCF lower flammability" means that the most flammable composition (worst case of formulation for flammability: WCF) has a burning velocity of ≤ 10 cm/s according to the US ANSI/ASHRAE Standard 34-2013. Further, a refrigerant having "ASHRAE lower flammability" means that the burning velocity of WCF is ≤ 10 cm/s, that the most flammable fraction composition (worst case of fractionation for flammability: WCFF), which is specified by performing a leakage test during storage, shipping, or use based on ANSI/ASHRAE 34-2013 using WCF, has a burning velocity of ≤ 10 cm/s, and that flammability classification according to the US ANSI/ASHRAE Standard 34-2013 is determined to classified as be "Class 2L."

A refrigerant having an "RCL of x% or more" means that the refrigerant has a refrigerant concentration limit (RCL), calculated in accordance with the US ANSI/ASHRAE Standard 34-2013, of x% or more. RCL refers to a concentration limit in the air in consideration of safety factors. RCL is an index for reducing the risk of acute toxicity, suffocation, and flammability in a closed space where humans are present. RCL is determined in accordance with the ASHRAE Standard. More specifically, RCL is the lowest concentration among the acute toxicity exposure limit (ATEL), the oxygen deprivation limit (ODL), and the flammable concentration limit (FCL), which are respectively calculated in accordance with sections 7.1.1, 7.1.2, and 7.1.3 of the ASHRAE Standard.

Temperature glide refers to an absolute value of the difference between the initial temperature and the end temperature in the phase change process of a composition containing the present refrigerant in the heat exchanger of a refrigerant system.

### 1. Refrigerant

### 1.1 Refrigerant Component

The present refrigerant is a mixed refrigerant comprising trans-1,2-difluoroethylene (HFO-1132(E)), trifluoroethylene (HFO-1123), and 2,3,3,3-tetrafluoro-1-propene (R1234yf) in such a mixing ratio that, when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments GI, IA, AA', A'B, BD, DC', C'C, and CG that connect the following 8 points:
point G (72.0, 28.0, 0.0),
point I (72.0, 0.0, 28.0),
point A (68.6, 0.0, 31.4),
point A' (30.6, 30.0, 39.4),
point B (0.0, 58.7, 41.3),
point D (0.0, 80.4, 19.6),
point C' (19.5, 70.5, 10.0), and
point C (32.9, 67.1, 0.0),
or on the above line segments (excluding the points on the line segments IA, BD, and CG);
the line segment AA' is represented by coordinates (x, 0.0016x²-0.9473x+57.497, -0.0016x²-0.0527x+42.503),
the line segment A'B is represented by coordinates (x, 0.0029x²-1.0268x+58.7, -0.0029x²+0.0268x+41.3),
the line segment DC' is represented by coordinates (x, 0.0082x²-0.6671x+80.4, -0.0082x²-0.3329x+19.6),
the line segment C'C is represented by coordinates (x, 0.0067x²-0.6034x+79.729, -0.0067x²-0.3966x+20.271), and
the line segments GI, IA, BD, and CG are straight lines.

The present refrigerant has various properties that are desirable as an R410A-alternative refrigerant, i.e., a refrigerating capacity and a coefficient of performance that are equivalent to those of R410A, and a sufficiently low GWP.

When the requirements above are satisfied, the present refrigerant has a refrigerating capacity ratio of ≥ 85% relative to that of R410A, and a COP of ≥ 92.5% relative to that of R410A; furthermore, the refrigerant has a WCF lower flammability according to the ASHRAE Standard (the WCF composition has a burning velocity of ≤ 10 cm/s).

The present refrigerant may further satisfy the following requirements.

### Requirements

In the present refrigerant the mixing ratio is preferably such that the coordinates (x,y,z) in the ternary composition diagram are within the range of a figure surrounded by line segments JP, PN, NK, KA', A'B, BD, DC', C'C, and CJ that connect the following 9 points:
point J (47.1, 52.9, 0.0),
point P (55.8, 42.0, 2.2),
point N (68.6, 16.3, 15.1),
point K (61.3, 5.4, 33.3),
point A' (30.6, 30.0, 39.4),
point B (0.0, 58.7, 41.3),
point D (0.0, 80.4, 19.6),
point C' (19.5, 70.5, 10.0), and
point C (32.9, 67.1, 0.0),
or on the above line segments (excluding the points on the line segments BD and CJ);
the line segment PN is represented by coordinates (x, -0.1135x²+12.112x-280.43, 0.1135x²-13.112x+380.43),
the line segment NK is represented by coordinates (x, 0.2421x²-29.955x+931.91, -0.2421x²+28.955x-831.91),
the line segment KA' is represented by coordinates (x, 0.0016x²-0.9473x+57.497, -0.0016x²-0.0527x+42.503),
the line segment A'B is represented by coordinates (x, 0.0029x²-1.0268x+58.7, -0.0029x²+0.0268x+41.3),
the line segment DC' is represented by coordinates (x, 0.0082x²-0.6671x+80.4, -0.0082x²-0.3329x+19.6),
the line segment C'C is represented by coordinates (x, 0.0067x²-0.6034x+79.729, -0.0067x²-0.3966x+20.271), and
the line segments JP, BD, and CJ are straight lines.

When the requirements above are satisfied, the present refrigerant has a refrigerating capacity ratio of ≥ 85% relative to that of R410A, and a COP of ≥ 92.5% relative to that of R410A; furthermore, the refrigerant exhibits a lower flammability (Class 2L) according to the ASHRAE Standard (the WCF composition and the WCFF composition have a burning velocity of ≤ 10 cm/s).

In the present refrigerant the mixing ratio is preferably such that the coordinates (x,y,z) in the ternary composition diagram are within the range of a figure surrounded by line segments JP, PL, LM, MA', A'B, BD, DC', C'C, and CJ that connect the following 9 points:
point J (47.1, 52.9, 0.0),
point P (55.8, 42.0, 2.2),
point L (63.1, 31.9, 5.0),
point M (60.3, 6.2, 33.5),
point A' (30.6, 30.0, 39.4),
point B (0.0, 58.7, 41.3),
point D (0.0, 80.4, 19.6),
point C' (19.5, 70.5, 10.0), and
point C (32.9, 67.1, 0.0),
or on the above line segments (excluding the points on the line segments BD and CJ);
the line segment PL is represented by coordinates (x, -0.1135x²+12.112x-280.43, 0.1135x²-13.112x+380.43)
the line segment MA' is represented by coordinates (x, 0.0016x²-0.9473x+57.497, -0.0016x²-0.0527x+42.503),
the line segment A'B is represented by coordinates (x, 0.0029x²-1.0268x+58.7, -0.0029x²+0.0268x+41.3),
the line segment DC' is represented by coordinates (x, 0.0082x²-0.6671x+80.4, -0.0082x²-0.3329x+19.6),
the line segment C'C is represented by coordinates (x, 0.0067x²-0.6034x+79.729, -0.0067x²-0.3966x+20.271), and
the line segments JP, LM, BD, and CJ are straight lines.

When the requirements above are satisfied, the present refrigerant has a refrigerating capacity ratio of ≥ 85% relative to that of R410A, and a COP of ≥ 92.5% relative to that of R410A; furthermore, the refrigerant has an RCL of ≥ 40 g/m³.

In the present refrigerant the mixing ratio is preferably such that the coordinates (x,y,z) in the ternary composition diagram are within the range of a figure surrounded by line segments PL, LM, MA', A'B, BF, FT, and TP that connect the following 7 points:
point P (55.8, 42.0, 2.2),
point L (63.1, 31.9, 5.0),
point M (60.3, 6.2, 33.5),
point A' (30.6, 30.0, 39.4),
point B (0.0, 58.7, 41.3),
point F (0.0, 61.8, 38.2), and
point T (35.8, 44.9, 19.3),
or on the above line segments (excluding the points on the line segment BF);
the line segment PL is represented by coordinates (x, -0.1135x²+12.112x-280.43, 0.1135x²-13.112x+380.43),
the line segment MA' is represented by coordinates (x, 0.0016x²-0.9473x+57.497, -0.0016x²-0.0527x+42.503),
the line segment A'B is represented by coordinates (x, 0.0029x²-1.0268x+58.7, -0.0029x²+0.0268x+41.3),
the line segment FT is represented by coordinates (x, 0.0078x²-0.7501x+61.8, -0.0078x²-0.2499x+38.2),
he line segment TP is represented by coordinates (x, 0.00672x²-0.7607x+63.525, -0.00672x²-0.2393x+36.475), and
the line segments LM and BF are straight lines.

When the requirements above are satisfied, the present refrigerant has a refrigerating capacity ratio of ≥ 85% relative to that of R410A, and a COP of ≥ 95% relative to that of R410A; furthermore, the refrigerant has an RCL of ≥ 40 g/m³.

In the present refrigerant the mixing ratio is preferably such that the coordinates (x,y,z) in the ternary composition diagram are within the range of a figure surrounded by line segments PL, LQ, QR, and RP that connect the following 4 points:
point P (55.8, 42.0, 2.2),
point L (63.1, 31.9, 5.0),
point Q (62.8, 29.6, 7.6), and
point R (49.8, 42.3, 7.9),
or on the above line segments;
the line segment PL is represented by coordinates (x, -0.1135x²+12.112x-280.43, 0.1135x²-13.112x+380.43),
the line segment RP is represented by coordinates (x, 0.00672x²-0.7607x+63.525, -0.00672x²-0.2393x+36.475), and
the line segments LQ and QR are straight lines.

When the requirements above are satisfied, the present refrigerant has a COP of ≥ 95% relative to that of R410A, and an RCL of ≥ 40 g/m³; furthermore, the refrigerant has a condensation temperature glide of ≤ 1°C.

In the present refrigerant the mixing ratio is preferably such that the coordinates (x,y,z) in the ternary composition diagram are within the range of a figure surrounded by line segments SM, MA', A'B, BF, FT, and TS that connect the following 6 points:
point S (62.6, 28.3, 9.1),
point M (60.3, 6.2, 33.5),
point A' (30.6, 30.0, 39.4),
point B (0.0, 58.7, 41.3),
point F (0.0, 61.8, 38.2), and
point T (35.8, 44.9, 19.3),
or on the above line segments,
the line segment MA' is represented by coordinates (x, 0.0016x²-0.9473x+57.497, -0.0016x²-0.0527x+42.503),
the line segment A'B is represented by coordinates (x, 0.0029x²-1.0268x+58.7, -0.0029x²+0.0268x+41.3),
the line segment FT is represented by coordinates (x, 0.0078x²-0.7501x+61.8, -0.0078x²-0.2499x+38.2),
the line segment TS is represented by coordinates (x, 0.0017x²-0.7869x+70.888, -0.0017x²-0.2131x+29.112), and
the line segments SM and BF are straight lines.

When the requirements above are satisfied, the present refrigerant has a refrigerating capacity ratio of ≥ 85% relative to that of R410A, a COP of ≥ 95% relative to that of R410A, and an RCL of ≥ 40 g/m³; furthermore, the refrigerant has a discharge pressure of ≥ 105% relative to that of R410A.

In the present refrigerant the mixing ratio is preferably such that the coordinates (x,y,z) in the ternary composition diagram are within the range of a figure surrounded by line segments Od, dg, gh, and hO that connect the following 4 points:
point d (87.6, 0.0, 12.4),
point g (18.2, 55.1, 26.7),
point h (56.7, 43.3, 0.0), and
point o (100.0, 0.0, 0.0),
or on the line segments Od, dg, gh, and hO (excluding the points O and h) ;
the line segment dg is represented by coordinates (0.0047y²-1.5177y+87.598, y, -0.0047y²+0.5177y+12.402),
the line segment gh is represented by coordinates (-0.0134z²-1.0825z+56.692, 0.0134z²+0.0825z+43.308, z), and
the line segments hO and Od are straight lines.

When the requirements above are satisfied, the refrigerant according to the present disclosure has a refrigerating capacity ratio of ≥ 92.5% relative to that of R410A, and a COP ratio of ≥ 92.5% relative to that of R410A.

In the present refrigerant the mixing ratio is preferably such that the coordinates (x,y,z) in the ternary composition diagram are within the range of a figure surrounded by line segments lg, gh, hi, and il that connect the following 4 points:
point l (72.5, 10.2, 17.3),
point g (18.2, 55.1, 26.7),
point h (56.7, 43.3, 0.0), and
point i (72.5, 27.5, 0.0) or
on the line segments lg, gh, and il (excluding the points h and i) ;
the line segment lg is represented by coordinates (0.0047y²-1.5177y+87.598, y, -0.0047y²+0.5177y+12.402),
the line gh is represented by coordinates (-0.0134z²-1.0825z+56.692, 0.0134z²+0.0825z+43.308, z), and
the line segments hi and il are straight lines.

When the requirements above are satisfied, the refrigerant according to the present disclosure has a refrigerating capacity ratio of ≥ 92.5% relative to that of R410A, and a COP ratio of ≥ 92.5% relative to that of R410A; furthermore, the refrigerant has a lower flammability (Class 2L) according to the ASHRAE Standard.

In the present refrigerant the mixing ratio is preferably such that the coordinates (x,y,z) in the ternary composition diagram are within the range of a figure surrounded by line segments Od, de, ef, and fO that connect the following 4 points:
point d (87.6, 0.0, 12.4),
point e (31.1, 42.9, 26.0),
point f (65.5, 34.5, 0.0), and
point O (100.0, 0.0, 0.0),
or on the line segments Od, de, and ef (excluding the points O and f);
the line segment de is represented by coordinates (0.0047y²-1.5177y+87.598, y, -0.0047y²+0.5177y+12.402),
the line segment ef is represented by coordinates (-0.0064z²-1.1565z+65.501, 0.0064z²+0.1565z+34.499, z), and
the line segments fO and Od are straight lines.

When the requirements above are satisfied, the refrigerant according to the present disclosure has a refrigerating capacity ratio of ≥ 93.5% relative to that of R410A, and a COP ratio of ≥ 93.5% relative to that of R410A.

In the present refrigerant the mixing ratio is preferably such that the coordinates (x,y,z) in the ternary composition diagram are within the range of a figure surrounded by line segments le, ef, fi, and il that connect the following 4 points:
point l (72.5, 10.2, 17.3),
point e (31.1, 42.9, 26.0),
point f (65.5, 34.5, 0.0), and
point i (72.5, 27.5, 0.0),
or on the line segments le, ef, and il (excluding the points f and i);
the line segment le is represented by coordinates (0.0047y²-1.5177y+87.598, y, -0.0047y²+0.5177y+12.402),
the line segment ef is represented by coordinates (-0.0134z²-1.0825z+56.692, 0.0134z²+0.0825z+43.308, z), and
the line segments fi and il are straight lines.

When the requirements above are satisfied, the refrigerant according to the present disclosure has a refrigerating capacity ratio of ≥ 93.5% relative to that of R410A, and a COP ratio of ≥ 93.5% relative to that of R410A; furthermore, the refrigerant has a lower flammability (Class 2L) according to the ASHRAE Standard.

In the present refrigerant the mixing ratio is preferably such that the coordinates (x,y,z) in the ternary composition diagram are within the range of a figure surrounded by line segments Oa, ab, bc, and cO that connect the following 4 points:
point a (93.4, 0.0, 6.6),
point b (55.6, 26.6, 17.8),
point c (77.6, 22.4, 0.0), and
point O (100.0, 0.0, 0.0),
or on the line segments Oa, ab, and be (excluding the points O and c) ;
the line segment ab is represented by coordinates (0.0052y²-1.5588y+93.385, y, -0.0052y²+0.5588y+6.615),
the line segment be is represented by coordinates (-0.0032z²-1.1791z+77.593, 0.0032z²+0.1791z+22.407, z), and
the line segments cO and Oa are straight lines.

When the requirements above are satisfied, the refrigerant according to the present disclosure has a refrigerating capacity ratio of ≥ 95% relative to that of R410A, and a COP ratio of ≥ 95% relative to that of R410A.

In the present refrigerant the mixing ratio is preferably such that the coordinates (x,y,z) in the ternary composition diagram are within the range of a figure surrounded by line segments kb, bj, and jk that connect the following 3 points:
point k (72.5, 14.1, 13.4),
point b (55.6, 26.6, 17.8), and
point j (72.5, 23.2, 4.3),
or on the line segments kb, bj, and jk;
the line segment kb is represented by coordinates (0.0052y²-1.5588y+93.385, y, and -0.0052y²+0.5588y+6.615),
the line segment bj is represented by coordinates (-0.0032z²-1.1791z+77.593, 0.0032z²+0.1791z+22.407, z), and
   the line segment jk is a straight line.

When the requirements above are satisfied, the present refrigerant has a refrigerating capacity ratio of ≥ 95% relative to that of R410A, and a COP ratio of ≥ 95% relative to that of R410A; furthermore, the refrigerant has a lower flammability (Class 2L) according to the ASHRAE Standard.

The present refrigerant may further comprise other additional refrigerants in addition to HFO-1132(E), HFO-1123, and R1234yf, as long as the above properties and effects are not impaired. In this respect, the present refrigerant preferably comprises HFO-1132(E), HFO-1123, and R1234yf in a total amount of ≥ 99.5 mass%, more preferably ≥ 99.75 mass%, and still more preferably ≥ 99.9 mass%, based on the entire refrigerant.

The present refrigerant may comprise HFO-1132(E), HFO-1123, and R1234yf in a total amount of ≥ 99.5 mass%, ≥ 99.75 mass%, or ≥ 99.9 mass%, based on the entire refrigerant.

Additional refrigerants are not particularly limited and can be widely selected. The mixed refrigerant may contain one additional refrigerant, or two or more additional refrigerants.

### 1.2. Use

The present refrigerant can be preferably used as a working fluid in a refrigerating machine.

The present composition is suitable for use as an alternative refrigerant for R410A.

### 2. Refrigerant Composition

The present refrigerant composition (also referred to as "the present composition") comprises at least the present refrigerant, and can be used for the same use as the present refrigerant. Moreover, the present composition can be further mixed with at least a refrigeration oil to thereby obtain a working fluid for a refrigerating machine.

The present composition further comprises at least one other component in addition to the present refrigerant. The present composition may comprise at least one of the following other components, if necessary. As described above, when the present composition is used as a working fluid in a refrigerating machine, it is generally used as a mixture with at least a refrigeration oil. Therefore, it is preferable that the present composition does not substantially comprise a refrigeration oil. Specifically, in the present composition, the content of the refrigeration oil based on the entire refrigerant composition is preferably 0-1 mass%, and more preferably 0-0.1 mass%.

### 2.1. Water

The present composition may contain a small amount of water. The water content of the composition is preferably ≤ 0.1 mass% based on the entire refrigerant. A small amount of water contained in the composition stabilizes double bonds in the molecules of unsaturated fluorocarbon compounds that can be present in the refrigerant, and makes it less likely that the unsaturated fluorocarbon compounds will be oxidized, thus increasing the stability of the composition.

### 2.2. Tracer

A tracer is added to the present composition at a detectable concentration such that when the composition has been diluted, contaminated, or undergone other changes, the tracer can trace the changes.

The present composition may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer. FC-14 (tetrafluoromethane, CF₄) HCC-40 (chloromethane, CH₃Cl) HFC-23 (trifluoromethane, CHF₃) HFC-41 (fluoromethane, CH₃Cl) HFC-125 (pentafluoroethane, CF₃CHF₂) HFC-134a (1,1,1,2-tetrafluoroethane, CF₃CH₂F) HFC-134 (1,1,2,2-tetrafluoroethane, CHF₂CHF₂) HFC-143a (1,1,1-trifluoroethane, CF₃CH₃) HFC-143 (1,1,2-trifluoroethane, CHF₂CH₂F) HFC-152a (1,1-difluoroethane, CHF₂CH₃) HFC-152 (1,2-difluoroethane, CH₂FCH₂F) HFC-161 (fluoroethane, CH₃CH₂F) HFC-245fa (1,1,1,3,3-pentafluoropropane, CF₃CH₂CHF₂) HFC-236fa (1,1,1,3,3,3-hexafluoropropane, CF₃CH₂CF₃) HFC-236ea (1,1,1,2,3,3-hexafluoropropane, CF₃CHFCHF₂) HFC-227ea (1,1,1,2,3,3,3-heptafluoropropane, CF₃CHFCF₃) HCFC-22 (chlorodifluoromethane, CHClF₂) HCFC-31 (chlorofluoromethane, CH₂ClF) CFC-1113 (chlorotrifluoroethylene, CF₂=CClF) HFE-125 (trifluoromethyl-difluoromethyl ether, CF₃OCHF₂) HFE-134a (trifluoromethyl-fluoromethyl ether, CF₃OCH₂F) HFE-143a (trifluoromethyl-methyl ether, CF₃OCH₃) HFE-227ea (trifluoromethyl-tetrafluoroethyl ether, CF₃OCHFCF₃) HFE-236fa (trifluoromethyl-trifluoroethyl ether, CF₃OCH₂CF₃)

The present composition may contain one or more tracers at a total concentration of 10-1000 parts per million by weight (ppm) based on the entire composition, preferably 30-500 ppm, and more preferably 50-300 ppm.

### 2.3. Ultraviolet Fluorescent Dye

The present composition may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The present composition may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01-5 mass%, and more preferably 0.05-2 mass%, based on the entire refrigerant.

### 2.5. Polymerization Inhibitor

The present composition may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01-5 mass%, and more preferably 0.05-2 mass%, based on the entire refrigerant.

### 3. Refrigeration Oil-Containing Working Fluid

The refrigeration oil-containing working fluid according to the present disclosure (also referred to as "the present working fluid" hereinafter) comprises at least the present refrigerant or the present composition and a refrigeration oil, for use as a working fluid in a refrigerating machine. Specifically, the present working fluid is obtained by mixing a refrigeration oil used in a compressor of a refrigerating machine with the refrigerant or the refrigerant composition. The working fluid generally comprises 10-50 mass% of refrigeration oil.

### 3.1. Refrigeration Oil

The present composition may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from antioxidants, extreme-pressure agents, acid scavengers, oxygen scavengers, copper deactivators, rust inhibitors, oil agents, and antifoaming agents.

A refrigeration oil with a kinematic viscosity of 5-400 cSt at 40°C is preferable from the standpoint of lubrication.

The present working fluid may further optionally contain at least one additive. Examples of additives include compatibilizing agents described below.

### 3.2. Compatibilizing Agent

The present working fluid may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The present method for operating a refrigerating machine is a method for operating a refrigerating machine using the present refrigerant.

Specifically, the present method comprises the step of circulating the present refrigerant in a refrigerating machine.

### Examples

The present disclosure is described in more detail below with reference to Examples.

The GWP of R1234yf and a composition consisting of a mixed refrigerant R410A (R32 = 50%/R125 = 50%) was evaluated based on the values stated in the Intergovernmental Panel on Climate Change (IPCC), fourth report. The GWP of HFO-1132(E), which was not stated therein, was assumed to be 1 from HFO-1132a (GWP ≤ 1) and HFO-1123 (GWP = 0.3, described in WO 2015/141678). The refrigerating capacity of R410A and compositions each comprising a mixture of HFO-1132(E), HFO-1123, and R1234yf was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

Further, the RCL of the mixture was calculated with the LFL of HFO-1132(E) being 4.7 vol.%, the LFL of HFO-1123 being 10 vol.%, and the LFL of R1234yf being 6.2 vol.%, in accordance with the ASHRAE Standard 34-2013.
Evaporating temperature: 5°C
Condensation temperature: 45°C
Degree of superheating: 5 K
Degree of subcooling: 5 K
Compressor efficiency: 70%

Tables 1 to 34 show these values together with the GWP of each mixed refrigerant.

**Table 1**

| Item | Unit | Com p. Ex. 1 | Com p. Ex. 2 | Com p. Ex. 3 | Example 1 | Example 2 | Example 3 | Com p. Ex. 4 |
|---|---|---|---|---|---|---|---|---|
| | | | O | A | | A' | | B |
| HFO-1132(E) | mass% | R410A | 100.0 | 68.6 | 49.0 | 30.6 | 14.1 | 0.0 |
| HFO-1123 | mass% | | 0.0 | 0.0 | 14.9 | 30.0 | 44.8 | 58.7 |
| R1234yf | mass% | | 0.0 | 31.4 | 36.1 | 39.4 | 41.1 | 41.3 |
| GWP | - | 2088 | 1 | 2 | 2 | 2 | 2 | 2 |
| COP ratio | % (relative to 410A) | 100 | 99.7 | 100.0 | 98.6 | 97.3 | 96.3 | 95.5 |
| Refrigerating capacity ratio | % (relative to 410A) | 100 | 98.3 | 85.0 | 85.0 | 85.0 | 85.0 | 85.0 |
| Condensation glide | °C | 0.1 | 0.00 | 1.98 | 3.36 | 4.46 | 5.15 | 5.35 |
| Discharge pressure | % (relative to 410A) | 100.0 | 99.3 | 87.1 | 88.9 | 90.6 | 92.1 | 93.2 |
| RCL | g/m³ | - | 30.7 | 37.5 | 44.0 | 52.7 | 64.0 | 78.6 |

**Table 2**

| Item | Unit | Com p. Ex. 5 | Example 4 | Example 5 | Example 6 | Comp. Ex. 6 | Com p. Ex. 7 | Example 7 | Com p. Ex. 8 |
|---|---|---|---|---|---|---|---|---|---|
| | | C | | C' | | D | E | E' | F |
| HFO-1132(E) | mass% | 32.9 | 26.6 | 19.5 | 10.9 | 0.0 | 58.0 | 23.4 | 0.0 |
| HFO-1123 | mass% | 67.1 | 68.4 | 70.5 | 74.1 | 80.4 | 42.0 | 48.5 | 61.8 |
| R1234yf | mass% | 0.0 | 5.0 | 10.0 | 15.0 | 19.6 | 0.0 | 28.1 | 38.2 |
| GWP | - | 1 | 1 | 1 | 1 | 2 | 1 | 2 | 2 |
| COP ratio | % (relative to 410A) | 92.5 | 92.5 | 92.5 | 92.5 | 92.5 | 95.0 | 95.0 | 95.0 |
| Refrigerating capacity ratio | % (relative to 410A) | 107.4 | 105.2 | 102.9 | 100.5 | 97.9 | 105.0 | 92.5 | 86.9 |
| Condensation glide | °C | 0.16 | 0.52 | 0.94 | 1.42 | 1.90 | 0.42 | 3.16 | 4.80 |
| Discharge pressure | % (relative to 410A) | 119.5 | 117.4 | 115.3 | 113.0 | 115.9 | 112.7 | 101.0 | 95.8 |
| RCL | g/m³ | 53.5 | 57.1 | 62.0 | 69.1 | 81.3 | 41.9 | 46.3 | 79.0 |

**Table 3**

| Item | Unit | Comp. Ex. 9 | Example 8 | Example 9 | Example 10 | Example 11 | Example 12 |
|---|---|---|---|---|---|---|---|
| | | J | P | L | N | N' | K |
| HFO-1132(E) | mass% | 47.1 | 55.8 | 63.1 | 68.6 | 65.0 | 61.3 |
| HFO-1123 | mass% | 52.9 | 42.0 | 31.9 | 16.3 | 7.7 | 5.4 |
| R1234yf | mass% | 0.0 | 2.2 | 5.0 | 15.1 | 27.3 | 33.3 |
| GWP | - | 1 | 1 | 1 | 1 | 2 | 2 |
| COP ratio | % (relative to 410A) | 93.8 | 95.0 | 96.1 | 97.9 | 99.1 | 99.5 |
| Refrigerating capacity ratio | % (relative to 410A) | 106.2 | 104.1 | 101.6 | 95.0 | 88.2 | 85.0 |
| Condensation glide | °C | 0.31 | 0.57 | 0.81 | 1.41 | 2.11 | 2.51 |
| Discharge pressure | % (relative to 410A) | 115.8 | 111.9 | 107.8 | 99.0 | 91.2 | 87.7 |
| RCL | g/m³ | 46.2 | 42.6 | 40.0 | 38.0 | 38.7 | 39.7 |

**Table 4**

| Item | Unit | Example 13 | Example 14 | Example 15 | Example 16 | Example 17 | Example 18 | Example 19 |
|---|---|---|---|---|---|---|---|---|
| | | L | M | Q | R | S | S' | T |
| HFO-1132(E) | mass% | 63.1 | 60.3 | 62.8 | 49.8 | 62.6 | 50.0 | 35.8 |
| HFO-1123 | mass% | 31.9 | 6.2 | 29.6 | 42.3 | 28.3 | 35.8 | 44.9 |
| R1234yf | mass% | 5.0 | 33.5 | 7.6 | 7.9 | 9.1 | 14.2 | 19.3 |
| GWP | - | 1 | 2 | 1 | 1 | 1 | 1 | 2 |
| COP ratio | % (relative to 410A) | 96.1 | 99.4 | 96.4 | 95.0 | 96.6 | 95.8 | 95.0 |
| Refrigerating capacity ratio | % (relative to 410A) | 101.6 | 85.0 | 100.2 | 101.7 | 99.4 | 98.1 | 96.7 |
| Condensation glide | °C | 0.81 | 2.58 | 1.00 | 1.00 | 1.10 | 1.55 | 2.07 |
| Discharge pressure | % (relative to 410A) | 107.8 | 87.9 | 106.0 | 109.6 | 105.0 | 105.0 | 105.0 |
| RCL | g/m³ | 40.0 | 40.0 | 40.0 | 44.8 | 40.0 | 44.4 | 50.8 |

**Table 5**

| Item | Unit | Comp. Ex. 10 | Example 20 | Example 21 |
|---|---|---|---|---|
| | | G | H | I |
| HFO-1132(E) | mass% | 72.0 | 72.0 | 72.0 |
| HFO-1123 | mass% | 28.0 | 14.0 | 0.0 |
| R1234yf | mass% | 0.0 | 14.0 | 28.0 |
| GWP | - | 1 | 1 | 2 |
| COP ratio | % (relative to 410A) | 96.6 | 98.2 | 99.9 |
| Refrigerating capacity ratio | % (relative to 410A) | 103.1 | 95.1 | 86.6 |
| Condensation glide | °C | 0.46 | 1.27 | 1.71 |
| Discharge pressure | % (relative to 410A) | 108.4 | 98.7 | 88.6 |
| RCL | g/m³ | 37.4 | 37.0 | 36.6 |

**Table 6**

| Item | Unit | Comp. Ex. 11 | Comp. Ex. 12 | Example 22 | Example 23 | Example 24 | Example 25 | Example 26 | Comp. Ex. 13 |
|---|---|---|---|---|---|---|---|---|---|
| HFO-1132(E) | mass% | 10.0 | 20.0 | 30.0 | 40.0 | 50.0 | 60.0 | 70.0 | 80.0 |
| HFO-1123 | mass% | 85.0 | 75.0 | 65.0 | 55.0 | 45.0 | 35.0 | 25.0 | 15.0 |
| R1234yf | mass% | 5.0 | 5.0 | 5.0 | 5.0 | 5.0 | 5.0 | 5.0 | 5.0 |
| GWP | - | 1 | 1 | 1 | 1 | 1 | 1 | 1 | 1 |
| COP ratio | % (relative to 410A) | 91.4 | 92.0 | 92.8 | 93.7 | 94.7 | 95.8 | 96.9 | 98.0 |
| Refrigerating capacity ratio | % (relative to 410A) | 105.7 | 105.5 | 105.0 | 104.3 | 103.3 | 102.0 | 100.6 | 99.1 |
| Condensation glide | °C | 0.40 | 0.46 | 0.55 | 0.66 | 0.75 | 0.80 | 0.79 | 0.67 |
| Discharge pressure | % (relative to 410A) | 120.1 | 118.7 | 116.7 | 114.3 | 111.6 | 108.7 | 105.6 | 102.5 |
| RCL | g/m³ | 71.0 | 61.9 | 54.9 | 49.3 | 44.8 | 41.0 | 37.8 | 35.1 |

**Table 7**

| Item | Unit | Comp. Ex. 14 | Example 27 | Example 28 | Example 29 | Example 30 | Example 31 | Example 32 | Comp. Ex. 15 |
|---|---|---|---|---|---|---|---|---|---|
| HFO-1132(E) | mass% | 10.0 | 20.0 | 30.0 | 40.0 | 50.0 | 60.0 | 70.0 | 80.0 |
| HFO-1123 | mass% | 80.0 | 70.0 | 60.0 | 50.0 | 40.0 | 30.0 | 20.0 | 10.0 |
| R1234yf | mass% | 10.0 | 10.0 | 10.0 | 10.0 | 10.0 | 10.0 | 10.0 | 10.0 |
| GWP | - | 1 | 1 | 1 | 1 | 1 | 1 | 1 | 1 |
| COP ratio | % (relative to 410A) | 91.9 | 92.5 | 93.3 | 94.3 | 95.3 | 96.4 | 97.5 | 98.6 |
| Refrigerating capacity ratio | % (relative to 410A) | 103.2 | 102.9 | 102.4 | 101.5 | 100.5 | 99.2 | 97.8 | 96.2 |
| Condensation glide | °C | 0.87 | 0.94 | 1.03 | 1.12 | 1.18 | 1.18 | 1.09 | 0.88 |
| Discharge pressure | % (relative to 410A) | 116.7 | 115.2 | 113.2 | 110.8 | 108.1 | 105.2 | 102.1 | 99.0 |
| RCL | g/m³ | 70.5 | 61.6 | 54.6 | 49.1 | 44.6 | 40.8 | 37.7 | 35.0 |

**Table 8**

| Item | Unit | Comp. Ex. 16 | Example 33 | Example 34 | Example 35 | Example 36 | Example 37 | Example 38 | Comp. Ex. 17 |
|---|---|---|---|---|---|---|---|---|---|
| HFO-1132(E) | mass% | 10.0 | 20.0 | 30.0 | 40.0 | 50.0 | 60.0 | 70.0 | 80.0 |
| HFO-1123 | mass% | 75.0 | 65.0 | 55.0 | 45.0 | 35.0 | 25.0 | 15.0 | 5.0 |
| R1234yf | mass% | 15.0 | 15.0 | 15.0 | 15.0 | 15.0 | 15.0 | 15.0 | 15.0 |
| GWP | - | 1 | 1 | 1 | 1 | 1 | 1 | 1 | 1 |
| COP ratio | % (relative to 410A) | 92.4 | 93.1 | 93.9 | 94.8 | 95.9 | 97.0 | 98.1 | 99.2 |
| Refrigerating capacity ratio | % (relative to 410A) | 100.5 | 100.2 | 99.6 | 98.7 | 97.7 | 96.4 | 94.9 | 93.2 |
| Condensation glide | °C | 1.41 | 1.49 | 1.56 | 1.62 | 1.63 | 1.55 | 1.37 | 1.05 |
| Discharge pressure | % (relative to 410A) | 113.1 | 111.6 | 109.6 | 107.2 | 104.5 | 101.6 | 98.6 | 95.5 |
| RCL | g/m³ | 70.0 | 61.2 | 54.4 | 48.9 | 44.4 | 40.7 | 37.5 | 34.8 |

**Table 9**

| Item | Unit | Example 39 | Example 40 | Example 41 | Example 42 | Example 43 | Example 44 | Example 45 |
|---|---|---|---|---|---|---|---|---|
| HFO-1132(E) | mass% | 10.0 | 20.0 | 30.0 | 40.0 | 50.0 | 60.0 | 70.0 |
| HFO-1123 | mass% | 70.0 | 60.0 | 50.0 | 40.0 | 30.0 | 20.0 | 10.0 |
| R1234yf | mass% | 20.0 | 20.0 | 20.0 | 20.0 | 20.0 | 20.0 | 20.0 |
| GWP | - | 2 | 2 | 2 | 2 | 2 | 2 | 2 |
| COP ratio | % (relative to 410A) | 93.0 | 93.7 | 94.5 | 95.5 | 96.5 | 97.6 | 98.7 |
| Refrigerating capacity ratio | % (relative to 410A) | 97.7 | 97.4 | 96.8 | 95.9 | 94.7 | 93.4 | 91.9 |
| Condensation glide | °C | 2.03 | 2.09 | 2.13 | 2.14 | 2.07 | 1.91 | 1.61 |
| Discharge pressure | % (relative to 410A) | 109.4 | 107.9 | 105.9 | 103.5 | 100.8 | 98.0 | 95.0 |
| RCL | g/m³ | 69.6 | 60.9 | 54.1 | 48.7 | 44.2 | 40.5 | 37.4 |

**Table 10**

| Item | Unit | Example 46 | Example 47 | Example 48 | Example 49 | Example 50 | Example 51 | Example 52 |
|---|---|---|---|---|---|---|---|---|
| HFO-1132(E) | mass% | 10.0 | 20.0 | 30.0 | 40.0 | 50.0 | 60.0 | 70.0 |
| HFO-1123 | mass% | 65.0 | 55.0 | 45.0 | 35.0 | 25.0 | 15.0 | 5.0 |
| R1234yf | mass% | 25.0 | 25.0 | 25.0 | 25.0 | 25.0 | 25.0 | 25.0 |
| GWP | - | 2 | 2 | 2 | 2 | 2 | 2 | 2 |
| COP ratio | % (relative to 410A) | 93.6 | 94.3 | 95.2 | 96.1 | 97.2 | 98.2 | 99.3 |
| Refrigerating capacity ratio | % (relative to 410A) | 94.8 | 94.5 | 93.8 | 92.9 | 91.8 | 90.4 | 88.8 |
| Condensation glide | °C | 2.71 | 2.74 | 2.73 | 2.66 | 2.50 | 2.22 | 1.78 |
| Discharge pressure | % (relative to 410A) | 105.5 | 104.0 | 102.1 | 99.7 | 97.1 | 94.3 | 91.4 |
| RCL | g/m³ | 69.1 | 60.5 | 53.8 | 48.4 | 44.0 | 40.4 | 37.3 |

**Table 11**

| Item | Unit | Example 53 | Example 54 | Example 55 | Example 56 | Example 57 | Example 58 |
|---|---|---|---|---|---|---|---|
| HFO-1132(E) | mass% | 10.0 | 20.0 | 30.0 | 40.0 | 50.0 | 60.0 |
| HFO-1123 | mass% | 60.0 | 50.0 | 40.0 | 30.0 | 20.0 | 10.0 |
| R1234yf | mass% | 30.0 | 30.0 | 30.0 | 30.0 | 30.0 | 30.0 |
| GWP | - | 2 | 2 | 2 | 2 | 2 | 2 |
| COP ratio | % (relative to 410A) | 94.3 | 95.0 | 95.9 | 96.8 | 97.8 | 98.9 |
| Refrigerating capacity ratio | % (relative to 410A) | 91.9 | 91.5 | 90.8 | 89.9 | 88.7 | 87.3 |
| Condensation glide | °C | 3.46 | 3.43 | 3.35 | 3.18 | 2.90 | 2.47 |
| Discharge pressure | % (relative to 410A) | 101.6 | 100.1 | 98.2 | 95.9 | 93.3 | 90.6 |
| RCL | g/m³ | 68.7 | 60.2 | 53.5 | 48.2 | 43.9 | 40.2 |

**Table 12**

| Item | Unit | Example 59 | Example 60 | Example 61 | Example 62 | Example 63 | Comp. Ex. 18 |
|---|---|---|---|---|---|---|---|
| HFO-1 132(E) | mass% | 10.0 | 20.0 | 30.0 | 40.0 | 50.0 | 60.0 |
| HFO-1123 | mass% | 55.0 | 45.0 | 35.0 | 25.0 | 15.0 | 5.0 |
| R1234yf | mass% | 35.0 | 35.0 | 35.0 | 35.0 | 35.0 | 35.0 |
| GWP | - | 2 | 2 | 2 | 2 | 2 | 2 |
| COP ratio | % (relative to 410A) | 95.0 | 95.8 | 96.6 | 97.5 | 98.5 | 99.6 |
| Refrigerating capacity ratio | % (relative to 410A) | 88.9 | 88.5 | 87.8 | 86.8 | 85.6 | 84.1 |
| Condensation glide | °C | 4.24 | 4.15 | 3.96 | 3.67 | 3.24 | 2.64 |
| Discharge pressure | % (relative to 410A) | 97.6 | 96.1 | 94.2 | 92.0 | 89.5 | 86.8 |
| RCL | g/m³ | 68.2 | 59.8 | 53.2 | 48.0 | 43.7 | 40.1 |

**Table 13**

| Item | Unit | Example 64 | Example 65 | Comp. Ex. 19 | Comp. Ex. 20 | Comp. Ex.21 |
|---|---|---|---|---|---|---|
| HFO-1132(E) | mass% | 10.0 | 20.0 | 30.0 | 40.0 | 50.0 |
| HFO-1123 | mass% | 50.0 | 40.0 | 30.0 | 20.0 | 10.0 |
| R1234vf | mass% | 40.0 | 40.0 | 40.0 | 40.0 | 40.0 |
| GWP | - | 2 | 2 | 2 | 2 | 2 |
| COP ratio | % (relative to 410A) | 95.9 | 96.6 | 97.4 | 98.3 | 99.2 |
| Refrigerating capacity ratio | % (relative to 410A) | 85.8 | 85.4 | 84.7 | 83.6 | 82.4 |
| Condensation glide | °C | 5.05 | 4.85 | 4.55 | 4.10 | 3.50 |
| Discharge pressure | % (relative to 410A) | 93.5 | 92.1 | 90.3 | 88.1 | 85.6 |
| RCL | g/m³ | 67.8 | 59.5 | 53.0 | 47.8 | 43.5 |

**Table 14**

| Item | Unit | Example 66 | Example 67 | Example 68 | Example 69 | Example 70 | Example 71 | Example 72 | Example 73 |
|---|---|---|---|---|---|---|---|---|---|
| HFO-1132(E) | mass% | 54.0 | 56.0 | 58.0 | 62.0 | 52.0 | 54.0 | 56.0 | 58.0 |
| HFO-1123 | mass% | 41.0 | 39.0 | 37.0 | 33.0 | 41.0 | 39.0 | 37.0 | 35.0 |
| R1234yf | mass% | 5.0 | 5.0 | 5.0 | 5.0 | 7.0 | 7.0 | 7.0 | 7.0 |
| GWP | - | 1 | 1 | 1 | 1 | 1 | 1 | 1 | 1 |
| COP ratio | % (relative to 410A) | 95.1 | 95.3 | 95.6 | 96.0 | 95.1 | 95.4 | 95.6 | 95.8 |
| Refrigerating capacity ratio | % (relative to 410A) | 102.8 | 102.6 | 102.3 | 101.8 | 101.9 | 101.7 | 101.5 | 101.2 |
| Condensation glide | °C | 0.78 | 0.79 | 0.80 | 0.81 | 0.93 | 0.94 | 0.95 | 0.95 |
| Discharge pressure | % (relative to 410A) | 110.5 | 109.9 | 109.3 | 108.1 | 109.7 | 109.1 | 108.5 | 107.9 |
| RCL | g/m³ | 43.2 | 42.4 | 41.7 | 40.3 | 43.9 | 43.1 | 42.4 | 41.6 |

**Table 15**

| Item | Unit | Example 74 | Example 75 | Example 76 | Example 77 | Example 78 | Example 79 | Example 80 | Example 81 |
|---|---|---|---|---|---|---|---|---|---|
| HFO-1132(E) | mass% | 60.0 | 62.0 | 61.0 | 58.0 | 60.0 | 62.0 | 52.0 | 54.0 |
| HFO-1123 | mass% | 33.0 | 31.0 | 29.0 | 30.0 | 28.0 | 26.0 | 34.0 | 32.0 |
| R1234yf | mass% | 7.0 | 7.0 | 10.0 | 12.0 | 12.0 | 12.0 | 14.0 | 14.0 |
| GWP | - | 1 | 1 | 1 | 1 | 1 | 1 | 1 | 1 |
| COP ratio | % (relative to 410A) | 96.0 | 96.2 | 96.5 | 96.4 | 96.6 | 96.8 | 96.0 | 96.2 |
| Refrigerating capacity ratio | % (relative to 410A) | 100.9 | 100.7 | 99.1 | 98.4 | 98.1 | 97.8 | 98.0 | 97.7 |
| Condensation glide | °C | 0.95 | 0.95 | 1.18 | 1.34 | 1.33 | 1.32 | 1.53 | 1.53 |
| Discharge pressure | % (relative to 410A) | 107.3 | 106.7 | 104.9 | 104.4 | 103.8 | 103.2 | 104.7 | 104.1 |
| RCL | g/m³ | 40.9 | 40.3 | 40.5 | 41.5 | 40.8 | 40.1 | 43.6 | 42.9 |

**Table 16**

| Item | Unit | Example 82 | Example 83 | Example 84 | Example 85 | Example 86 | Example 87 | Example 88 | Example 89 |
|---|---|---|---|---|---|---|---|---|---|
| HFO-1132(E) | mass% | 56.0 | 58.0 | 60.0 | 48.0 | 50.0 | 52.0 | 54.0 | 56.0 |
| HFO-1123 | mass% | 30.0 | 28.0 | 26.0 | 36.0 | 34.0 | 32.0 | 30.0 | 28.0 |
| R1234yf | mass% | 14.0 | 14.0 | 14.0 | 16.0 | 16.0 | 16.0 | 16.0 | 16.0 |
| GWP | - | 1 | 1 | 1 | 1 | 1 | 1 | 1 | 1 |
| COP ratio | % (relative to 410A) | 96.4 | 96.6 | 96.9 | 95.8 | 96.0 | 96.2 | 96.4 | 96.7 |
| Refrigerating capacity ratio | % (relative to 410A) | 97.5 | 97.2 | 96.9 | 97.3 | 97.1 | 96.8 | 96.6 | 96.3 |
| Condensation glide | °C | 1.51 | 1.50 | 1.48 | 1.72 | 1.72 | 1.71 | 1.69 | 1.67 |
| Discharge pressure | % (relative to 410A) | 103.5 | 102.9 | 102.3 | 104.3 | 103.8 | 103.2 | 102.7 | 102.1 |
| RCL | g/m³ | 42.1 | 41.4 | 40.7 | 45.2 | 44.4 | 43.6 | 42.8 | 42.1 |

**Table 17**

| Item | Unit | Example 90 | Example 91 | Example 92 | Example 93 | Example 94 | Example 95 | Example 96 | Example 97 |
|---|---|---|---|---|---|---|---|---|---|
| HFO-1132(E) | mass% | 58.0 | 60.0 | 42.0 | 44.0 | 46.0 | 48.0 | 50.0 | 52.0 |
| HFO-1123 | mass% | 26.0 | 24.0 | 40.0 | 38.0 | 36.0 | 34.0 | 32.0 | 30.0 |
| R1234yf | mass% | 16.0 | 16.0 | 18.0 | 18.0 | 18.0 | 18.0 | 18.0 | 18.0 |
| GWP | - | 1 | 1 | 2 | 2 | 2 | 2 | 2 | 2 |
| COP ratio | % (relative to 410A) | 96.9 | 97.1 | 95.4 | 95.6 | 95.8 | 96.0 | 96.3 | 96.5 |
| Refrigerating capacity ratio | % (relative to 410A) | 96.1 | 95.8 | 96.8 | 96.6 | 96.4 | 96.2 | 95.9 | 95.7 |
| Condensation glide | °C | 1.65 | 1.63 | 1.93 | 1.92 | 1.92 | 1.91 | 1.89 | 1.88 |
| Discharge pressure | % (relative to 410A) | 101.5 | 100.9 | 104.5 | 103.9 | 103.4 | 102.9 | 102.3 | 101.8 |
| RCL | g/m3 | 41.4 | 40.7 | 47.8 | 46.9 | 46.0 | 45.1 | 44.3 | 43.5 |

**Table 18**

| Item | Unit | Example 98 | Example 99 | Example 100 | Example 101 | Example 102 | Example 103 | Example 104 | Example 105 |
|---|---|---|---|---|---|---|---|---|---|
| HFO-1132(E) | mass% | 54.0 | 56.0 | 58.0 | 60.0 | 36.0 | 38.0 | 42.0 | 44.0 |
| HFO-1123 | mass% | 28.0 | 26.0 | 24.0 | 22.0 | 44.0 | 42.0 | 38.0 | 36.0 |
| R1234yf | mass% | 18.0 | 18.0 | 18.0 | 18.0 | 20.0 | 20.0 | 20.0 | 20.0 |
| GWP | - | 2 | 2 | 2 | 2 | 2 | 2 | 2 | 2 |
| COP ratio | % (relative to 410A) | 96.7 | 96.9 | 97.1 | 97.3 | 95.1 | 95.3 | 95.7 | 95.9 |
| Refrigerating capacity ratio | % (relative to 410A) | 95.4 | 95.2 | 94.9 | 94.6 | 96.3 | 96.1 | 95.7 | 95.4 |
| Condensation glide | °C | 1.86 | 1.83 | 1.80 | 1.77 | 2.14 | 2.14 | 2.13 | 2.12 |
| Discharge pressure | % (relative to 410A) | 101.2 | 100.6 | 100.0 | 99.5 | 104.5 | 104.0 | 103.0 | 102.5 |
| RCL | g/m³ | 42.7 | 42.0 | 41.3 | 40.6 | 50.7 | 49.7 | 47.7 | 46.8 |

**Table 19**

| Item | Unit | Example 106 | Example 107 | Example 108 | Example 109 | Example 110 | Example 111 | Example 112 | Example 113 |
|---|---|---|---|---|---|---|---|---|---|
| HFO-1132(E) | mass% | 46.0 | 48.0 | 52.0 | 54.0 | 56.0 | 58.0 | 34.0 | 36.0 |
| HFO-1123 | mass% | 34.0 | 32.0 | 28.0 | 26.0 | 24.0 | 22.0 | 44.0 | 42.0 |
| R1234yf | mass% | 20.0 | 20.0 | 20.0 | 20.0 | 20.0 | 20.0 | 22.0 | 22.0 |
| GWP | - | 2 | 2 | 2 | 2 | 2 | 2 | 2 | 2 |
| COP ratio | % (relative to 410A) | 96.1 | 96.3 | 96.7 | 96.9 | 97.2 | 97.4 | 95.1 | 95.3 |
| Refrigerating capacity ratio | % (relative to 410A) | 95.2 | 95.0 | 94.5 | 94.2 | 94.0 | 93.7 | 95.3 | 95.1 |
| Condensation glide | °C | 2.11 | 2.09 | 2.05 | 2.02 | 1.99 | 1.95 | 2.37 | 2.36 |
| Discharge | % (relative | 101.9 | 101.4 | 100.3 | 99.7 | 99.2 | 98.6 | 103.4 | 103.0 |
| pressure | to 410A) | | | | | | | | |
| RCL | g/m³ | 45.9 | 45.0 | 43.4 | 42.7 | 41.9 | 41.2 | 51.7 | 50.6 |

**Table 20**

| Item | Unit | Example 114 | Example 115 | Example 116 | Example 117 | Example 118 | Example 119 | Example 120 | Example 121 |
|---|---|---|---|---|---|---|---|---|---|
| HFO-1132(E) | mass% | 38.0 | 40.0 | 42.0 | 44.0 | 46.0 | 48.0 | 50.0 | 52.0 |
| HFO-1123 | mass% | 40.0 | 38.0 | 36.0 | 34.0 | 32.0 | 30.0 | 28.0 | 26.0 |
| R1234yf | mass% | 22.0 | 22.0 | 22.0 | 22.0 | 22.0 | 22.0 | 22.0 | 22.0 |
| GWP | - | 2 | 2 | 2 | 2 | 2 | 2 | 2 | 2 |
| COP ratio | % (relative to 410A) | 95.5 | 95.7 | 95.9 | 96.1 | 96.4 | 96.6 | 96.8 | 97.0 |
| Refrigerating capacity ratio | % (relative to 410A) | 94.9 | 94.7 | 94.5 | 94.3 | 94.0 | 93.8 | 93.6 | 93.3 |
| Condensation glide | °C | 2.36 | 2.35 | 2.33 | 2.32 | 2.30 | 2.27 | 2.25 | 2.21 |
| Discharge pressure | % (relative to 410A) | 102.5 | 102.0 | 101.5 | 101.0 | 100.4 | 99.9 | 99.4 | 98.8 |
| RCL | g/m³ | 49.6 | 48.6 | 47.6 | 46.7 | 45.8 | 45.0 | 44.1 | 43.4 |

**Table 21**

| Item | Unit | Example 122 | Example 123 | Example 124 | Example 125 | Example 126 | Example 127 | Example 128 | Example 129 |
|---|---|---|---|---|---|---|---|---|---|
| HFO-1132(E) | mass% | 54.0 | 56.0 | 58.0 | 60.0 | 32.0 | 34.0 | 36.0 | 38.0 |
| HFO-1123 | mass% | 24.0 | 22.0 | 20.0 | 18.0 | 44.0 | 42.0 | 40.0 | 38.0 |
| R1234yf | mass% | 22.0 | 22.0 | 22.0 | 22.0 | 24.0 | 24.0 | 24.0 | 24.0 |
| GWP | - | 2 | 2 | 2 | 2 | 2 | 2 | 2 | 2 |
| COP ratio | % (relative to 410A) | 97.2 | 97.4 | 97.6 | 97.9 | 95.2 | 95.4 | 95.6 | 95.8 |
| Refrigerating capacity ratio | % (relative to 410A) | 93.0 | 92.8 | 92.5 | 92.2 | 94.3 | 94.1 | 93.9 | 93.7 |
| Condensation glide | °C | 2.18 | 2.14 | 2.09 | 2.04 | 2.61 | 2.60 | 2.59 | 2.58 |
| Discharge pressure | % (relative to 410A) | 98.2 | 97.7 | 97.1 | 96.5 | 102.4 | 101.9 | 101.5 | 101.0 |
| RCL | g/m³ | 42.6 | 41.9 | 41.2 | 40.5 | 52.7 | 51.6 | 50.5 | 49.5 |

**Table 22**

| Item | Unit | Example 130 | Example 131 | Example 132 | Example 133 | Example 134 | Example 135 | Example 136 | Example 137 |
|---|---|---|---|---|---|---|---|---|---|
| HFO-1132(E) | mass% | 40.0 | 42.0 | 44.0 | 46.0 | 48.0 | 50.0 | 52.0 | 54.0 |
| HFO-1123 | mass% | 36.0 | 34.0 | 32.0 | 30.0 | 28.0 | 26.0 | 24.0 | 22.0 |
| R1234yf | mass% | 24.0 | 24.0 | 24.0 | 24.0 | 24.0 | 24.0 | 24.0 | 24.0 |
| GWP | - | 2 | 2 | 2 | 2 | 2 | 2 | 2 | 2 |
| COP ratio | % (relative | 96.0 | 96.2 | 96.4 | 96.6 | 96.8 | 97.0 | 97.2 | 97.5 |
| | to 410A) | | | | | | | | |
| Refrigerating capacity ratio | % (relative to 410A) | 93.5 | 93.3 | 93.1 | 92.8 | 92.6 | 92.4 | 92.1 | 91.8 |
| Condensation glide | °C | 2.56 | 2.54 | 2.51 | 2.49 | 2.45 | 2.42 | 2.38 | 2.33 |
| Discharge pressure | % (relative to 410A) | 100.5 | 100.0 | 99.5 | 98.9 | 98.4 | 97.9 | 97.3 | 96.8 |
| RCL | g/m³ | 48.5 | 47.5 | 46.6 | 45.7 | 44.9 | 44.1 | 43.3 | 42.5 |

**Table 23**

| Item | Unit | Example 138 | Example 139 | Example 140 | Example 141 | Example 142 | Example 143 | Example 144 | Example 145 |
|---|---|---|---|---|---|---|---|---|---|
| HFO-1132(E) | mass% | 56.0 | 58.0 | 60.0 | 30.0 | 32.0 | 34.0 | 36.0 | 38.0 |
| HFO-1123 | mass% | 20.0 | 18.0 | 16.0 | 44.0 | 42.0 | 40.0 | 38.0 | 36.0 |
| R1234yf | mass% | 24.0 | 24.0 | 24.0 | 26.0 | 26.0 | 26.0 | 26.0 | 26.0 |
| GWP | - | 2 | 2 | 2 | 2 | 2 | 2 | 2 | 2 |
| COP ratio | % (relative to 410A) | 97.7 | 97.9 | 98.1 | 95.3 | 95.5 | 95.7 | 95.9 | 96.1 |
| Refrigerating capacity ratio | % (relative to 410A) | 91.6 | 91.3 | 91.0 | 93.2 | 93.1 | 92.9 | 92.7 | 92.5 |
| Condensation glide | °C | 2.28 | 2.22 | 2.16 | 2.86 | 2.85 | 2.83 | 2.81 | 2.79 |
| Discharge pressure | % (relative to 410A) | 96.2 | 95.6 | 95.1 | 101.3 | 100.8 | 100.4 | 99.9 | 99.4 |
| RCL | g/m³ | 41.8 | 41.1 | 40.4 | 53.7 | 52.6 | 51.5 | 50.4 | 49.4 |

**Table 24**

| Item | Unit | Example 146 | Example 147 | Example 148 | Example 149 | Example 150 | Example 151 | Example 152 | Example 153 |
|---|---|---|---|---|---|---|---|---|---|
| HFO-1132(E) | mass% | 40.0 | 42.0 | 44.0 | 46.0 | 48.0 | 50.0 | 52.0 | 54.0 |
| HFO-1123 | mass% | 34.0 | 32.0 | 30.0 | 28.0 | 26.0 | 24.0 | 22.0 | 20.0 |
| R1234yf | mass% | 26.0 | 26.0 | 26.0 | 26.0 | 26.0 | 26.0 | 26.0 | 26.0 |
| GWP | - | 2 | 2 | 2 | 2 | 2 | 2 | 2 | 2 |
| COP ratio | % (relative to 410A) | 96.3 | 96.5 | 96.7 | 96.9 | 97.1 | 97.3 | 97.5 | 97.7 |
| Refrigerating capacity ratio | % (relative to 410A) | 92.3 | 92.1 | 91.9 | 91.6 | 91.4 | 91.2 | 90.9 | 90.6 |
| Condensation glide | °C | 2.77 | 2.74 | 2.71 | 2.67 | 2.63 | 2.59 | 2.53 | 2.48 |
| Discharge pressure | % (relative to 410A) | 99.0 | 98.5 | 97.9 | 97.4 | 96.9 | 96.4 | 95.8 | 95.3 |
| RCL | g/m³ | 48.4 | 47.4 | 46.5 | 45.7 | 44.8 | 44.0 | 43.2 | 42.5 |

**Table 25**

| Item | Unit | Example 154 | Example 155 | Example 156 | Example 157 | Example 158 | Example 159 | Example 160 | Example 161 |
|---|---|---|---|---|---|---|---|---|---|
| HFO-1132(E) | mass% | 56.0 | 58.0 | 60.0 | 30.0 | 32.0 | 34.0 | 36.0 | 38.0 |
| HFO-1123 | mass% | 18.0 | 16.0 | 14.0 | 42.0 | 40.0 | 38.0 | 36.0 | 34.0 |
| R1234yf | mass% | 26.0 | 26.0 | 26.0 | 28.0 | 28.0 | 28.0 | 28.0 | 28.0 |
| GWP | - | 2 | 2 | 2 | 2 | 2 | 2 | 2 | 2 |
| COP ratio | % (relative to 410A) | 97.9 | 98.2 | 98.4 | 95.6 | 95.8 | 96.0 | 96.2 | 96.3 |
| Refrigerating capacity ratio | % (relative to 410A) | 90.3 | 90.1 | 89.8 | 92.1 | 91.9 | 91.7 | 91.5 | 91.3 |
| Condensation glide | °C | 2.42 | 2.35 | 2.27 | 3.10 | 3.09 | 3.06 | 3.04 | 3.01 |
| Discharge pressure | % (relative to 410A) | 94.7 | 94.1 | 93.6 | 99.7 | 99.3 | 98.8 | 98.4 | 97.9 |
| RCL | g/m³ | 41.7 | 41.0 | 40.3 | 53.6 | 52.5 | 51.4 | 50.3 | 49.3 |

**Table 26**

| Item | Unit | Example 162 | Example 163 | Example 164 | Example 165 | Example 166 | Example 167 | Example 168 | Example 169 |
|---|---|---|---|---|---|---|---|---|---|
| HFO-1132(E) | mass% | 40.0 | 42.0 | 44.0 | 46.0 | 48.0 | 50.0 | 52.0 | 54.0 |
| HFO-1123 | mass% | 32.0 | 30.0 | 28.0 | 26.0 | 24.0 | 22.0 | 20.0 | 18.0 |
| R1234yf | mass% | 28.0 | 28.0 | 28.0 | 28.0 | 28.0 | 28.0 | 28.0 | 28.0 |
| GWP | - | 2 | 2 | 2 | 2 | 2 | 2 | 2 | 2 |
| COP ratio | % (relative to 410A) | 96.5 | 96.7 | 96.9 | 97.2 | 97.4 | 97.6 | 97.8 | 98.0 |
| Refrigerating capacity ratio | % (relative to 410A) | 91.1 | 90.9 | 90.7 | 90.4 | 90.2 | 89.9 | 89.7 | 89.4 |
| Condensation glide | °C | 2.98 | 2.94 | 2.90 | 2.85 | 2.80 | 2.75 | 2.68 | 2.62 |
| Discharge pressure | % (relative to 410A) | 97.4 | 96.9 | 96.4 | 95.9 | 95.4 | 94.9 | 94.3 | 93.8 |
| RCL | g/m³ | 48.3 | 47.4 | 46.4 | 45.6 | 44.7 | 43.9 | 43.1 | 42.4 |

**Table 27**

| Item | Unit | Example 170 | Example 171 | Example 172 | Example 173 | Example 174 | Example 175 | Example 176 | Example 177 |
|---|---|---|---|---|---|---|---|---|---|
| HFO-1132(E) | mass% | 56.0 | 58.0 | 60.0 | 32.0 | 34.0 | 36.0 | 38.0 | 42.0 |
| HFO-1123 | mass% | 16.0 | 14.0 | 12.0 | 38.0 | 36.0 | 34.0 | 32.0 | 28.0 |
| R1234yf | mass% | 28.0 | 28.0 | 28.0 | 30.0 | 30.0 | 30.0 | 30.0 | 30.0 |
| GWP | - | 2 | 2 | 2 | 2 | 2 | 2 | 2 | 2 |
| COP ratio | % (relative to 410A) | 98.2 | 98.4 | 98.6 | 96.1 | 96.2 | 96.4 | 96.6 | 97.0 |
| Refrigerating capacity ratio | % (relative to 410A) | 89.1 | 88.8 | 88.5 | 90.7 | 90.5 | 90.3 | 90.1 | 89.7 |
| Condensation glide | °C | 2.54 | 2.46 | 2.38 | 3.32 | 3.30 | 3.26 | 3.22 | 3.14 |
| Discharge pressure | % (relative to 410A) | 93.2 | 92.6 | 92.1 | 97.7 | 97.3 | 96.8 | 96.4 | 95.4 |
| RCL | g/m³ | 41.7 | 41.0 | 40.3 | 52.4 | 51.3 | 50.2 | 49.2 | 47.3 |

**Table 28**

| Item | Unit | Example 178 | Example 179 | Example 180 | Example 181 | Example 182 | Example 183 | Example 184 | Example 185 |
|---|---|---|---|---|---|---|---|---|---|
| HFO-1132(E) | mass% | 44.0 | 46.0 | 48.0 | 50.0 | 52.0 | 54.0 | 56.0 | 58.0 |
| HFO-1123 | mass% | 26.0 | 24.0 | 22.0 | 20.0 | 18.0 | 16.0 | 14.0 | 12.0 |
| R1234yf | mass% | 30.0 | 30.0 | 30.0 | 30.0 | 30.0 | 30.0 | 30.0 | 30.0 |
| GWP | - | 2 | 2 | 2 | 2 | 2 | 2 | 2 | 2 |
| COP ratio | % (relative to 410A) | 97.2 | 97.4 | 97.6 | 97.8 | 98.0 | 98.3 | 98.5 | 98.7 |
| Refrigerating capacity ratio | % (relative to 410A) | 89.4 | 89.2 | 89.0 | 88.7 | 88.4 | 88.2 | 87.9 | 87.6 |
| Condensation glide | °C | 3.08 | 3.03 | 2.97 | 2.90 | 2.83 | 2.75 | 2.66 | 2.57 |
| Discharge pressure | % (relative to 410A) | 94.9 | 94.4 | 93.9 | 93.3 | 92.8 | 92.3 | 91.7 | 91.1 |
| RCL | g/m³ | 46.4 | 45.5 | 44.7 | 43.9 | 43.1 | 42.3 | 41.6 | 40.9 |

**Table 29**

| Item | Unit | Example 186 | Example 187 | Example 188 | Example 189 | Example 190 | Example 191 | Example 192 | Example 193 |
|---|---|---|---|---|---|---|---|---|---|
| HFO-1132(E) | mass% | 30.0 | 32.0 | 34.0 | 36.0 | 38.0 | 40.0 | 42.0 | 44.0 |
| HFO-1123 | mass% | 38.0 | 36.0 | 34.0 | 32.0 | 30.0 | 28.0 | 26.0 | 24.0 |
| R1234yf | mass% | 32.0 | 32.0 | 32.0 | 32.0 | 32.0 | 32.0 | 32.0 | 32.0 |
| GWP | - | 2 | 2 | 2 | 2 | 2 | 2 | 2 | 2 |
| COP ratio | % (relative to 410A) | 96.2 | 96.3 | 96.5 | 96.7 | 96.9 | 97.1 | 97.3 | 97.5 |
| Refrigerating capacity ratio | % (relative to 410A) | 89.6 | 89.5 | 89.3 | 89.1 | 88.9 | 88.7 | 88.4 | 88.2 |
| Condensation glide | °C | 3.60 | 3.56 | 3.52 | 3.48 | 3.43 | 3.38 | 3.33 | 3.26 |
| Discharge pressure | % (relative to 410A) | 96.6 | 96.2 | 95.7 | 95.3 | 94.8 | 94.3 | 93.9 | 93.4 |
| RCL | g/m³ | 53.4 | 52.3 | 51.2 | 50.1 | 49.1 | 48.1 | 47.2 | 46.3 |

**Table 30**

| Item | Unit | Example 194 | Example 195 | Example 196 | Example 197 | Example 198 | Example 199 | Example 200 | Example 201 |
|---|---|---|---|---|---|---|---|---|---|
| HFO-1132(E) | mass% | 46.0 | 48.0 | 50.0 | 52.0 | 54.0 | 56.0 | 58.0 | 60.0 |
| HFO-1123 | mass% | 22.0 | 20.0 | 18.0 | 16.0 | 14.0 | 12.0 | 10.0 | 8.0 |
| R1234yf | mass% | 32.0 | 32.0 | 32.0 | 32.0 | 32.0 | 32.0 | 32.0 | 32.0 |
| GWP | - | 2 | 2 | 2 | 2 | 2 | 2 | 2 | 2 |
| COP ratio | % (relative to 410A) | 97.7 | 97.9 | 98.1 | 98.3 | 98.5 | 98.7 | 98.9 | 99.2 |
| Refrigerating capacity ratio | % (relative to 410A) | 88.0 | 87.7 | 87.5 | 87.2 | 86.9 | 86.6 | 86.3 | 86.0 |
| Condensation glide | °C | 3.20 | 3.12 | 3.04 | 2.96 | 2.87 | 2.77 | 2.66 | 2.55 |
| Discharge pressure | % (relative to 410A) | 92.8 | 92.3 | 91.8 | 91.3 | 90.7 | 90.2 | 89.6 | 89.1 |
| RCL | g/m³ | 45.4 | 44.6 | 43.8 | 43.0 | 42.3 | 41.5 | 40.8 | 40.2 |

**Table 31**

| Item | Unit | Example 202 | Example 203 | Example 204 | Example 205 | Example 206 | Example 207 | Example 208 | Example 209 |
|---|---|---|---|---|---|---|---|---|---|
| HFO-1132(E) | mass% | 30.0 | 32.0 | 34.0 | 36.0 | 38.0 | 40.0 | 42.0 | 44.0 |
| HFO-1123 | mass% | 36.0 | 34.0 | 32.0 | 30.0 | 28.0 | 26.0 | 24.0 | 22.0 |
| R1234yf | mass% | 34.0 | 34.0 | 34.0 | 34.0 | 34.0 | 34.0 | 34.0 | 34.0 |
| GWP | - | 2 | 2 | 2 | 2 | 2 | 2 | 2 | 2 |
| COP ratio | % (relative to 410A) | 96.5 | 96.6 | 96.8 | 97.0 | 97.2 | 97.4 | 97.6 | 97.8 |
| Refrigerating capacity ratio | % (relative to 410A) | 88.4 | 88.2 | 88.0 | 87.8 | 87.6 | 87.4 | 87.2 | 87.0 |
| Condensation glide | °C | 3.84 | 3.80 | 3.75 | 3.70 | 3.64 | 3.58 | 3.51 | 3.43 |
| Discharge pressure | % (relative to 410A) | 95.0 | 94.6 | 94.2 | 93.7 | 93.3 | 92.8 | 92.3 | 91.8 |
| RCL | g/m³ | 53.3 | 52.2 | 51.1 | 50.0 | 49.0 | 48.0 | 47.1 | 46.2 |

**Table 32**

| Item | Unit | Example 210 | Example 211 | Example 212 | Example 213 | Example 214 | Example 215 | Example 216 | Example 217 |
|---|---|---|---|---|---|---|---|---|---|
| HFO-1132(E) | mass% | 46.0 | 48.0 | 50.0 | 52.0 | 54.0 | 30.0 | 32.0 | 34.0 |
| HFO-1123 | mass% | 20.0 | 18.0 | 16.0 | 14.0 | 12.0 | 34.0 | 32.0 | 30.0 |
| R1234yf | mass% | 34.0 | 34.0 | 34.0 | 34.0 | 34.0 | 36.0 | 36.0 | 36.0 |
| GWP | - | 2 | 2 | 2 | 2 | 2 | 2 | 2 | 2 |
| COP ratio | % (relative to 410A) | 98.0 | 98.2 | 98.4 | 98.6 | 98.8 | 96.8 | 96.9 | 97.1 |
| Refrigerating capacity ratio | % (relative to 410A) | 86.7 | 86.5 | 86.2 | 85.9 | 85.6 | 87.2 | 87.0 | 86.8 |
| Condensation glide | °C | 3.36 | 3.27 | 3.18 | 3.08 | 2.97 | 4.08 | 4.03 | 3.97 |
| Discharge pressure | % (relative to 410A) | 91.3 | 90.8 | 90.3 | 89.7 | 89.2 | 93.4 | 93.0 | 92.6 |
| RCL | g/m³ | 45.3 | 44.5 | 43.7 | 42.9 | 42.2 | 53.2 | 52.1 | 51.0 |

**Table 33**

| Item | Unit | Example 218 | Example 219 | Example 220 | Example 221 | Example 222 | Example 223 | Example 224 | Example 225 |
|---|---|---|---|---|---|---|---|---|---|
| HFO-1132(E) | mass% | 36.0 | 38.0 | 40.0 | 42.0 | 44.0 | 46.0 | 30.0 | 32.0 |
| HFO-1123 | mass% | 28.0 | 26.0 | 24.0 | 22.0 | 20.0 | 18.0 | 32.0 | 30.0 |
| R1234yf | mass% | 36.0 | 36.0 | 36.0 | 36.0 | 36.0 | 36.0 | 38.0 | 38.0 |
| GWP | - | 2 | 2 | 2 | 2 | 2 | 2 | 2 | 2 |
| COP ratio | % (relative to 410A) | 97.3 | 97.5 | 97.7 | 97.9 | 98.1 | 98.3 | 97.1 | 97.2 |
| Refrigerating capacity ratio | % (relative to 410A) | 86.6 | 86.4 | 86.2 | 85.9 | 85.7 | 85.5 | 85.9 | 85.7 |
| Condensation glide | °C | 3.91 | 3.84 | 3.76 | 3.68 | 3.60 | 3.50 | 4.32 | 4.25 |
| Discharge pressure | % (relative to 410A) | 92.1 | 91.7 | 91.2 | 90.7 | 90.3 | 89.8 | 91.9 | 91.4 |
| RCL | g/m³ | 49.9 | 48.9 | 47.9 | 47.0 | 46.1 | 45.3 | 53.1 | 52.0 |

**Table 34**

| Item | Unit | Example 226 | Example 227 |
|---|---|---|---|
| HFO-1132(E) | mass% | 34.0 | 36.0 |
| HFO-1123 | mass% | 28.0 | 26.0 |
| R1234vf | mass% | 38.0 | 38.0 |
| GWP | - | 2 | 2 |
| COP ratio | % (relative to 410A) | 97.4 | 97.6 |
| Refrigerating capacity ratio | % (relative to 410A) | 85.6 | 85.3 |
| Condensation glide | °C | 4.18 | 4.11 |
| Discharge pressure | % (relative to 410A) | 91.0 | 90.6 |
| RCL | g/m³ | 50.9 | 49.8 |

These results indicate that under the condition that the mass% of HFO-1132(E), HFO-1123, and R1234yf based on their sum is respectively represented by x, y, and z, when coordinates (x,y,z) in a ternary composition diagram in which the sum of HFO-1132(E), HFO-1123, and R1234yf is 100 mass% are within the range of a figure surrounded by line segments AA', A'B, BD, DC', C'C, CO, and OA that connect the following 7 points:
point A (68.6, 0.0, 31.4),
point A' (30.6, 30.0, 39.4),
point B (0.0, 58.7, 41.3),
point D (0.0, 80.4, 19.6),
point C' (19.5, 70.5, 10.0),
point C (32.9, 67.1, 0.0), and
point O (100.0, 0.0, 0.0),
or on the above line segments (excluding the points on the line segment CO);
the line segment AA' is represented by coordinates (x, 0.0016x²-0.9473x+57.497, -0.0016x²-0.0527x+42.503),
the line segment A'B is represented by coordinates (x, 0.0029x²-1.0268x+58.7, -0.0029x²+0.0268x+41.3,
the line segment DC' is represented by coordinates (x, 0.0082x²-0.6671x+80.4, -0.0082x²-0.3329x+19.6),
the line segment C'C is represented by coordinates (x, 0.0067x²-0.6034x+79.729, -0.0067x²-0.3966x+20.271), and
the line segments BD, CO, and OA are straight lines,
the refrigerant has a refrigerating capacity ratio of ≥ 85% relative to that of R410A, and a COP of ≥ 92.5% relative to that of R410A.

The point on the line segment AA' was determined by obtaining an approximate curve connecting point A, Example 1, and point A' by the least square method.

The point on the line segment A'B was determined by obtaining an approximate curve connecting point A', Example 3, and point B by the least square method.

The point on the line segment DC' was determined by obtaining an approximate curve connecting point D, Example 6, and point C' by the least square method.

The point on the line segment C'C was determined by obtaining an approximate curve connecting point C', Example 4, and point C by the least square method.

Likewise, the results indicate that when coordinates (x,y,z) are within the range of a figure surrounded by line segments AA', A'B, BF, FT, TE, EO, and OA that connect the following 7 points:
point A (68.6, 0.0, 31.4),
point A' (30.6, 30.0, 39.4),
point B (0.0, 58.7, 41.3),
point F (0.0, 61.8, 38.2),
point T (35.8, 44.9, 19.3),
point E (58.0, 42.0, 0.0) and
point O (100.0, 0.0, 0.0),
or on the above line segments (excluding the points on the line EO) ;
the line segment AA' is represented by coordinates (x, 0.0016x²-0.9473x+57.497, -0.0016x²-0.0527x+42.503),
the line segment A'B is represented by coordinates (x, 0.0029x²-1.0268x+58.7, -0.0029x²+0.0268x+41.3),
the line segment FT is represented by coordinates (x, 0.0078x²-0.7501x+61.8, -0.0078x²-0.2499x+38.2), and
the line segment TE is represented by coordinates (x, 0.0098x²-0.0398x+42.0, -0.0098x²-0.9602x+58.0), and
the line segments BF, FO, and OA are straight lines,
the refrigerant has a refrigerating capacity ratio of ≥ 85% relative to that of R410A, and a COP of ≥ 95% relative to that of R410A.

The point on the line segment FT was determined by obtaining an approximate curve connecting three points, i.e., points T, E', and F, by the least square method.

The point on the line segment TE was determined by obtaining an approximate curve connecting three points, i.e., points E, R, and T, by the least square method.

The results in Tables 1-34 clearly indicate that in a ternary composition diagram of the mixed refrigerant of HFO-1132(E), HFO-1123, and R1234yf in which the sum of these components is 100 mass%, a line segment connecting a point (0.0, 100.0, 0.0) and a point (0.0, 0.0, 100.0) is the base, the point (0.0, 100.0, 0.0) is on the left side, and the point (0.0, 0.0, 100.0) is on the right side, when coordinates (x,y,z) are on or below the line segment LM connecting point L (63.1, 31.9, 5.0) and point M (60.3, 6.2, 33.5), the refrigerant has an RCL of ≥ 40 g/m³.

The results in Tables 1-34 clearly indicate that in a ternary composition diagram of the mixed refrigerant of HFO-1132(E), HFO-1123 and R1234yf in which their sum is 100 mass%, a line segment connecting a point (0.0, 100.0, 0.0) and a point (0.0, 0.0, 100.0) is the base, the point (0.0, 100.0, 0.0) is on the left side, and the point (0.0, 0.0, 100.0) is on the right side, when coordinates (x,y,z) are on the line segment QR connecting point Q (62.8, 29.6, 7.6) and point R (49.8, 42.3, 7.9) or on the left side of the line segment, the refrigerant has a temperature glide of ≤ 1°C.

The results in Tables 1-34 clearly indicate that in a ternary composition diagram of the mixed refrigerant of HFO-1132(E), HFO-1123, and R1234yf in which their sum is 100 mass%, a line segment connecting a point (0.0, 100.0, 0.0) and a point (0.0, 0.0, 100.0) is the base, the point (0.0, 100.0, 0.0) is on the left side, and the point (0.0, 0.0, 100.0) is on the right side, when coordinates (x,y,z) are on the line segment ST connecting point S (62.6, 28.3, 9.1) and point T (35.8, 44.9, 19.3) or on the right side of the line segment, the refrigerant has a discharge pressure of ≤ 105% relative to that of 410A.

In these compositions, R1234yf contributes to reducing flammability, and suppressing deterioration of polymerization etc. Therefore, the composition preferably contains R1234yf.

Further, the burning velocity of these mixed refrigerants whose mixed formulations were adjusted to WCF concentrations was measured according to the ANSI/ASHRAE Standard 34-2013. Compositions having a burning velocity of ≤ 10 cm/s were determined to be classified as "Class 2L (lower flammability)."

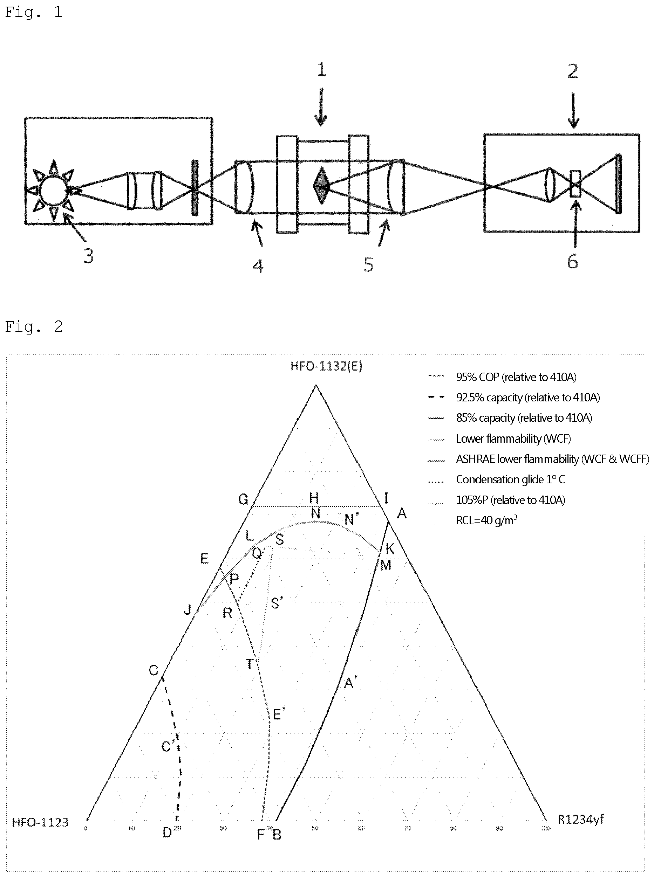

A burning velocity test was performed using the apparatus shown in Fig. 1 in the following manner. First, the mixed refrigerants used had a purity of ≥ 99.5%, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0-9.9 ms, and the ignition energy was typically about 0.1-1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. Schlieren images of the flame were recorded by a high-speed digital video camera at a frame rate of 600 fps and stored on a PC.

Each WCFF concentration was obtained by using the WCF concentration as the initial concentration and performing a leak simulation using NIST Standard Reference Database REFLEAK Version 4.0.

Tables 35 and 36 show the results.

**Table 35**

| Item | | Unit | G | H | I |
|---|---|---|---|---|---|
| WCF | HFO-1132 (E) | mass% | 72.0 | 72.0 | 72.0 |
| | HFO-1123 | mass% | 28.0 | 9.6 | 0.0 |
| | R1234yf | mass% | 0.0 | 18.4 | 28.0 |
| Burning velocity (WCF) | | cm/s | 10 | 10 | 10 |

**Table 36**

| Item | | Unit | J | P | L | N | N' | K |
|---|---|---|---|---|---|---|---|---|
| WCF | HFO-1132 (E) | mass% | 47.1 | 55.8 | 63.1 | 68.6 | 65.0 | 61.3 |
| | HFO-1123 | mass% | 52.9 | 42.0 | 31.9 | 16.2 | 7.7 | 5.4 |

| | R1234yf | mass% | 0.0 | 2.2 | 5.0 | 15.2 | 27.3 | 33.3 |
|---|---|---|---|---|---|---|---|---|
| Leak condition that results in WCFF | | | Storage/ Shipping -40°C, | Storage/ Shipping -40°C, | Storage/ Shipping -40°C, | Storage/ Shipping -40°C, | Storage/ Shipping -40°C, | Storage/ Shipping, -40°C, |
| | | | 92% release, liquid phase side | 90% release, liquid phase side | 90% release, gas phase side | 66% release, gas phase side | 12% release, gas phase side | 0% release, gas phase side |
| WCFF | HFO-1132 (E) | mass% | 72.0 | 72.0 | 72.0 | 72.0 | 72.0 | 72.0 |
| | HFO-1123 | mass% | 28.0 | 17.8 | 17.4 | 13.6 | 12.3 | 9.8 |
| | R1234yf | mass% | 0.0 | 10.2 | 10.6 | 14.4 | 15.7 | 18.2 |
| Burning velocity (WCF) | | cm/s | ≤ 8 | ≤ 8 | ≤ 8 | 9 | 9 | < 8 |
| Burning velocity (WCFF) | | cm/s | 10 | 10 | 10 | 10 | 10 | 10 |

The results in Table 35 clearly indicate that when a mixed refrigerant of HFO-1132(E), HFO-1123, and R1234yf contains HFO-1132(E) in a proportion of ≤ 72.0 mass% based on their sum, the refrigerant can be determined to have a WCF lower flammability.

The results in Tables 36 clearly indicate that in a ternary composition diagram of a mixed refrigerant of HFO-1132(E), HFO-1123, and R1234yf in which their sum is 100 mass%, and a line segment connecting a point (0.0, 100.0, 0.0) and a point (0.0, 0.0, 100.0) is the base,
when coordinates (x,y,z) are on or below the line segments JP, PN, and NK connecting the following 6 points:
point J (47.1, 52.9, 0.0),
point P (55.8, 42.0, 2.2),
point L (63.1,31.9,5.0)
point N (68.6, 16.3, 15.1)
point N' (65.0,7.7,27.3) and
point K (61.3, 5.4, 33.3),
the refrigerant can be determined to have a WCF lower flammability, and a WCFF lower flammability.
In the diagram, the line segment PN is represented by coordinates (x, -0.1135x²+12.112x-280.43, 0.1135x²-13.112x+380.43), and the line segment NK is represented by coordinates (x, 0.2421x²-29.955x+931.91, -0.2421x²+28.955x-831.91).

The point on the line segment PN was determined by obtaining an approximate curve connecting three points, i.e., points P, L, and N, by the least square method.

The point on the line segment NK was determined by obtaining an approximate curve connecting three points, i.e., points N, N', and K, by the least square method.

### Description of Reference Numerals

1: Sample cell
2: High-speed camera
3: Xenon lamp
4: Collimating lens
5: Collimating lens
6: Ring filter

## Claims

1. A composition comprising a refrigerant, wherein the refrigerant comprises trans-1,2-difluoroethylene (HFO-1132(E)), trifluoroethylene (HFO-1123), and 2,3,3,3-tetrafluoro-1-propene (R1234yf) in such a mixing ratio that, when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments GI, IA, AA', A'B, BD, DC', C'C, and CG that connect the following 8 points:
point G (72.0, 28.0, 0.0),
point I (72.0, 0.0, 28.0),
point A (68.6, 0.0, 31.4),
point A' (30.6, 30.0, 39.4),
point B (0.0, 58.7, 41.3),
point D (0.0, 80.4, 19.6),
point C' (19.5, 70.5, 10.0), and
point C (32.9, 67.1, 0.0),
or on the above line segments (excluding the points on the line segments IA, BD, and CG);
the line segment AA' is represented by coordinates (x, 0.0016x²-0.9473x+57.497, -0.0016x²-0.0527x+42.503),
the line segment A'B is represented by coordinates (x, 0.0029x²-1.0268x+58.7, -0.0029x²+0.0268x+41.3),
the line segment DC' is represented by coordinates (x, 0.0082x²-0.6671x+80.4, -0.0082x²-0.3329x+19.6),
the line segment C'C is represented by coordinates (x, 0.0067x²-0.6034x+79.729, -0.0067x²-0.3966x+20.271), and
the line segments GI, IA, BD, and CG are straight lines.

2. The composition of claim 1, wherein in the refrigerant the mixing ratio is such that the coordinates (x,y,z) in the ternary composition diagram are within the range of a figure surrounded by line segments JP, PN, NK, KA', A'B, BD, DC', C'C, and CJ that connect the following 9 points:
point J (47.1, 52.9, 0.0),
point P (55.8, 42.0, 2.2),
point N (68.6, 16.3, 15.1),
point K (61.3, 5.4, 33.3),
point A' (30.6, 30.0, 39.4),
point B (0.0, 58.7, 41.3),
point D (0.0, 80.4, 19.6),
point C' (19.5, 70.5, 10.0), and
point C (32.9, 67.1, 0.0),
or on the above line segments (excluding the points on the line segments BD and CJ);
the line segment PN is represented by coordinates (x, -0.1135x²+12.112x-280.43, 0.1135x²-13.112x+380.43),
the line segment NK is represented by coordinates (x, 0.2421x²-29.955x+931.91, -0.2421x²+28.955x-831.91),
the line segment KA' is represented by coordinates (x, 0.0016x²-0.9473x+57.497, -0.0016x²-0.0527x+42.503),
the line segment A'B is represented by coordinates (x, 0.0029x²-1.0268x+58.7, -0.0029x²+0.0268x+41.3),
the line segment DC' is represented by coordinates (x, 0.0082x²-0.6671x+80.4, -0.0082x²-0.3329x+19.6),
the line segment C'C is represented by coordinates (x, 0.0067x²-0.6034x+79.729, -0.0067x²-0.3966x+20.271), and
the line segments JP, BD, and CJ are straight lines.

3. The composition of claim 1, wherein in the refrigerant the mixing ratio is such that the coordinates (x,y,z) in the ternary composition diagram are within the range of a figure surrounded by line segments JP, PL, LM, MA', A'B, BD, DC', C'C, and CJ that connect the following 9 points:
point J (47.1, 52.9, 0.0),
point P (55.8, 42.0, 2.2),
point L (63.1, 31.9, 5.0),
point M (60.3, 6.2, 33.5),
point A' (30.6, 30.0, 39.4),
point B (0.0, 58.7, 41.3),
point D (0.0, 80.4, 19.6),
point C' (19.5, 70.5, 10.0), and
point C (32.9, 67.1, 0.0),
or on the above line segments (excluding the points on the line segments BD and CJ);
the line segment PL is represented by coordinates (x, -0.1135x²+12.112x-280.43, 0.1135x²-13.112x+380.43)
the line segment MA' is represented by coordinates (x, 0.0016x²-0.9473x+57.497, -0.0016x²-0.0527x+42.503),
the line segment A'B is represented by coordinates (x, 0.0029x²-1.0268x+58.7, -0.0029x²+0.0268x+41.3),
the line segment DC' is represented by coordinates (x, 0.0082x²-0.6671x+80.4, -0.0082x²-0.3329x+19.6),
the line segment C'C is represented by coordinates (x, 0.0067x²-0.6034x+79.729, -0.0067x²-0.3966x+20.271), and
the line segments JP, LM, BD, and CJ are straight lines.

4. The composition of claim 1, wherein in the refrigerant the mixing ratio is such that the coordinates (x,y,z) in the ternary composition diagram are within the range of a figure surrounded by line segments PL, LM, MA', A'B, BF, FT, and TP that connect the following 7 points:
point P (55.8, 42.0, 2.2),
point L (63.1, 31.9, 5.0),
point M (60.3, 6.2, 33.5),
point A' (30.6, 30.0, 39.4),
point B (0.0, 58.7, 41.3),
point F (0.0, 61.8, 38.2), and
point T (35.8, 44.9, 19.3),
or on the above line segments (excluding the points on the line segment BF);
the line segment PL is represented by coordinates (x, -0.1135x²+12.112x-280.43, 0.1135x²-13.112x+380.43),
the line segment MA' is represented by coordinates (x, 0.0016x²-0.9473x+57.497, -0.0016x²-0.0527x+42.503),
the line segment A'B is represented by coordinates (x, 0.0029x²-1.0268x+58.7, -0.0029x²+0.0268x+41.3),
the line segment FT is represented by coordinates (x, 0.0078x²-0.7501x+61.8, -0.0078x²-0.2499x+38.2),
he line segment TP is represented by coordinates (x, 0.00672x²-0.7607x+63.525, -0.00672x²-0.2393x+36.475), and
the line segments LM and BF are straight lines.

5. The composition of claim 1, wherein in the refrigerant the mixing ratio is such that thecoordinates (x,y,z) in the ternary composition diagram are within the range of a figure surrounded by line segments PL, LQ, QR, and RP that connect the following 4 points:
point P (55.8, 42.0, 2.2),
point L (63.1, 31.9, 5.0),
point Q (62.8, 29.6, 7.6), and
point R (49.8, 42.3, 7.9),
or on the above line segments;
the line segment PL is represented by coordinates (x, -0.1135x²+12.112x-280.43, 0.1135x²-13.112x+380.43),
the line segment RP is represented by coordinates (x, 0.00672x²-0.7607x+63.525, -0.00672x²-0.2393x+36.475), and
the line segments LQ and QR are straight lines.

6. The composition of claim 1, wherein in the refrigerant the mixing ratio is such that thecoordinates (x,y,z) in the ternary composition diagram are within the range of a figure surrounded by line segments SM, MA', A'B, BF, FT, and TS that connect the following 6 points:
point S (62.6, 28.3, 9.1),
point M (60.3, 6.2, 33.5),
point A' (30.6, 30.0, 39.4),
point B (0.0, 58.7, 41.3),
point F (0.0, 61.8, 38.2), and
point T (35.8, 44.9, 19.3),
or on the above line segments,
the line segment MA' is represented by coordinates (x, 0.0016x²-0.9473x+57.497, -0.0016x²-0.0527x+42.503),
the line segment A'B is represented by coordinates (x, 0.0029x²-1.0268x+58.7, -0.0029x²+0.0268x+41.3),
the line segment FT is represented by coordinates (x, 0.0078x²-0.7501x+61.8, -0.0078x²-0.2499x+38.2),
the line segment TS is represented by coordinates (x, 0.0017x²-0.7869x+70.888, -0.0017x²-0.2131x+29.112), and
the line segments SM and BF are straight lines.

7. The composition of any of claims 1-6, which is suitable for use as a working fluid for a refrigerating machine and further comprises a refrigeration oil.

8. Use of the composition of any of claims 1-7 as an alternative refrigerant for R410A.

9. A refrigerating machine comprising the composition of any of claims 1-7 as a working fluid.

10. A method for operating a refrigerating machine, comprising circulating the composition of any of claims 1-7 as a working fluid in a refrigerating machine.

## Patentansprüche

1. Zusammensetzung, umfassend ein Kältemittel, worin das Kältemittel trans-1,2-Difluorethylen (HFO-1132(E)), Trifluorethylen (HFO-1123) und 2,3,3,3-Tetrafluor-1-propen (R1234yf) in einem solchen Mischungsverhältnis umfasst, dass, wenn der Massenprozentsatz von HFO-1132(E), HFO-1123 und R1234yf basierend auf ihrer Summe im Kältemittel jeweils durch x, y und z dargestellt ist, die Koordinaten (x,y,z) in einem ternären Zusammensetzungsdiagramm, in dem die Summe von HFO-1132(E), HFO-1123 und R1234yf 100 Massen-% beträgt, innerhalb des Bereichs einer Figur liegen, die von den Liniensegmenten GI, IA, AA', A'B, BD, DC', C'C und CG, die die folgenden 8 Punkte verbinden, umgeben ist:
Punkt G (72,0, 28,0, 0, 0),
Punkt I (72,0, 0,0, 28,0),
Punkt A (68,6, 0,0, 31,4),
Punkt A' (30,6, 30,0, 39,4),
Punkt B (0,0, 58,7, 41,3),
Punkt D (0,0, 80,4, 19,6),
Punkt C' (19,5, 70,5, 10,0) und
Punkt C (32,9, 67,1, 0,0),
oder auf den oben genannten Liniensegmenten (mit Ausnahme der Punkte auf den Liniensegmenten IA, BD und CG);
das Liniensegment AA' durch Koordinaten
(x, 0,0016x²-0,9473x+57,497, -0,0016x²-0,0527x+42,503) dargestellt ist,
das Liniensegment A'B durch Koordinaten
(x, 0,0029x²-1,0268x+58,7, -0,0029x²+0,0268x+41,3) dargestellt ist,
das Liniensegment DC' durch Koordinaten
(x, 0,0082x²-0, 6671x+80,4, -0,0082x²-0, 3329x+19,6) dargestellt ist,
das Liniensegment C'C durch Koordinaten
(x, 0,0067x²-0,6034x+79,729, -0,0067x²-0,3966x+20,271) dargestellt ist und
die Liniensegmente GI, IA, BD und CG gerade Linien sind.

2. Zusammensetzung gemäß Anspruch 1, worin das Mischungsverhältnis im Kältemittel so ist, dass die Koordinaten (x,y,z) im ternären Zusammensetzungsdiagramm innerhalb des Bereichs einer Figur liegen, die von Liniensegmenten JP, PN, NK, KA', A'B, BD, DC', C'C und CJ, die die folgenden 9 Punkte verbinden, umgeben ist:
Punkt J (47,1, 52,9, 0,0),
Punkt P (55,8, 42,0, 2,2),
Punkt N (68,6, 16,3, 15,1),
Punkt K (61,3, 5,4, 33,3),
Punkt A' (30,6, 30,0, 39,4),
Punkt B (0,0, 58,7, 41,3),
Punkt D (0,0, 80,4, 19,6),
Punkt C' (19,5, 70,5, 10,0) und
Punkt C (32,9, 67,1, 0,0),
oder auf den oben genannten Liniensegmenten (mit Ausnahme der Punkte auf den Liniensegmenten BD und CJ);
das Liniensegment PN durch Koordinaten (x, - 0,1135x²+12,112x-280,43, 0,1135x²-13,112x+380,43) dargestellt ist,
das Liniensegment NK durch Koordinaten (x, 0,2421x²-29,955x+931,91, -0,2421x²+28,955x-831,91) dargestellt ist,
das Liniensegment KA' durch Koordinaten (x, 0,0016x²-0,9473x+57,497, -0,0016x²-0,0527x+42,503) dargestellt ist,
das Liniensegment A'B durch Koordinaten (x, 0,0029x²-1,0268x+58,7, -0,0029x²+0,0268x+41,3) dargestellt ist,
das Liniensegment DC' durch Koordinaten (x, 0,0082x²-0, 6671x+80,4, -0,0082x²-0,3329x+19,6) dargestellt ist,
das Liniensegment C'C durch Koordinaten (x, 0,0067x²-0,6034x+79, 729, -0,0067x²-0,3966x+20,271) dargestellt ist und
die Liniensegmente JP, BD und CJ gerade Linien sind.

3. Zusammensetzung gemäß Anspruch 1, worin das Mischungsverhältnis im Kältemittel so ist, dass die Koordinaten (x,y,z) im ternären Zusammensetzungsdiagramm innerhalb des Bereichs einer Figur liegen, die von Liniensegmenten JP, PL, LM, MA', A'B, BD, DC', C'C und CJ, die die folgenden 9 Punkte verbinden, umgeben ist:
Punkt J (47,1, 52,9, 0,0),
Punkt P (55,8, 42,0, 2,2),
Punkt L (63,1, 31,9, 5,0),
Punkt M (60,3, 6,2, 33,5),
Punkt A' (30,6, 30,0, 39,4),
Punkt B (0,0, 58,7, 41,3),
Punkt D (0,0, 80,4, 19,6),
Punkt C' (19,5, 70,5, 10,0) und
Punkt C (32,9, 67,1, 0,0),
oder auf den oben genannten Liniensegmenten (mit Ausnahme der Punkte auf den Liniensegmenten BD und CJ);
das Liniensegment PL durch Koordinaten (x, - 0,1135x²+12,112x-280,43, 0,1135x²-13,112x+380,43) dargestellt ist,
das Liniensegment MA' durch Koordinaten (x, 0,0016x²-0,9473x+57,497, -0,0016x²-0,0527x+42,503) dargestellt ist,
das Liniensegment A'B durch Koordinaten (x, 0,0029x²-1,0268x+58,7, -0,0029x²+0,0268x+41,3) dargestellt ist,
das Liniensegment DC' durch Koordinaten (x, 0,0082x²-0, 6671x+80,4, -0,0082x²-0,3329x+19,6) dargestellt ist,
das Liniensegment C'C durch Koordinaten (x, 0,0067x²-0,6034x+79,729, -0,0067x²-0,3966x+20,271) dargestellt ist und
die Liniensegmente JP, LM, BD und CJ gerade Linien sind.

4. Zusammensetzung gemäß Anspruch 1, worin das Mischungsverhältnis im Kältemittel so ist, dass die Koordinaten (x,y,z) im ternären Zusammensetzungsdiagramm innerhalb des Bereichs einer Figur liegen, die von Liniensegmenten PL, LM, MA', A'B, BF, FT und TP, die die folgenden 7 Punkte verbinden, umgeben ist:
Punkt P (55,8, 42,0, 2,2),
Punkt L (63,1, 31,9, 5,0),
Punkt M (60,3, 6,2, 33,5),
Punkt A' (30,6, 30,0, 39,4),
Punkt B (0,0, 58,7, 41,3),
Punkt F (0, 0, 61,8, 38,2) und
Punkt T (35,8, 44,9, 19,3),
oder auf den oben genannten Liniensegmenten (mit Ausnahme der Punkte auf dem Liniensegment BF);
das Liniensegment PL durch Koordinaten (x, - 0,1135x²+12,112x-280,43, 0,1135x²-13,112x+380,43) dargestellt ist,
das Liniensegment MA' durch Koordinaten (x, 0,0016x²-0,9473x+57,497, -0,0016x²-0,0527x+42,503) dargestellt ist,
das Liniensegment A'B durch Koordinaten (x, 0,0029x²-1,0268x+58,7, -0,0029x²+0,0268x+41,3) dargestellt ist,
das Liniensegment FT durch Koordinaten (x, 0,0078x²-0,7501x+61,8, -0,0078x²-0,2499x+38,2) dargestellt ist,
das Liniensegment TP durch Koordinaten (x, 0,00672x²-0,7607x+63,525, -0,00672x²-0,2393x+36,475) dargestellt ist und
die Liniensegmente LM und BF gerade Linien sind.

5. Zusammensetzung gemäß Anspruch 1, worin das Mischungsverhältnis im Kältemittel so ist, dass die Koordinaten (x,y,z) im ternären Zusammensetzungsdiagramm innerhalb des Bereichs einer Figur liegen, die von Liniensegmenten PL, LQ, QR und RP, die die folgenden 4 Punkte verbinden, umgeben ist:
Punkt P (55,8, 42,0, 2,2),
Punkt L (63,1, 31,9, 5,0),
Punkt Q (62,8, 29,6, 7,6) und
Punkt R (49,8, 42,3, 7,9),
oder auf den oben genannten Liniensegmenten;
das Liniensegment PL durch Koordinaten (x, - 0,1135x²+12,112x-280,43, 0,1135x²-13,112x+380,43) dargestellt ist,
das Liniensegment RP durch Koordinaten (x, 0,00672x²-0,7607x+63,525, -0,00672x²-0,2393x+36,475) dargestellt ist und
die Liniensegmente LQ und QR gerade Linien sind.

6. Zusammensetzung gemäß Anspruch 1, worin das Mischungsverhältnis im Kältemittel so ist, dass die Koordinaten (x,y,z) im ternären Zusammensetzungsdiagramm innerhalb des Bereichs einer Figur liegen, die von Liniensegmenten SM, MA', A'B, BF, FT und TS, die die folgenden 6 Punkte verbinden, umgeben ist:
Punkt S (62,6, 28,3, 9,1),
Punkt M (60,3, 6,2, 33,5),
Punkt A' (30,6, 30,0, 39,4),
Punkt B (0,0, 58,7, 41,3),
Punkt F (0,0, 61,8, 38,2) und
Punkt T (35,8, 44,9, 19,3),
oder auf den oben genannten Liniensegmenten,
das Liniensegment MA' durch Koordinaten (x, 0,0016x²-0,9473x+57,497, -0,0016x²-0,0527x+42,503) dargestellt ist,
das Liniensegment A'B durch Koordinaten (x, 0,0029x²-1,0268x+58,7, -0,0029x²+0,0268x+41,3) dargestellt ist,
das Liniensegment FT durch Koordinaten (x, 0,0078x²-0,7501x+61,8, -0,0078x²-0,2499x+38,2) dargestellt ist,
das Liniensegment TS durch Koordinaten (x, 0,0017x²-0,7869x+70,888, -0,0017x²-0,2131x+29,112) dargestellt ist und
die Liniensegmente SM und BF gerade Linien sind.

7. Zusammensetzung gemäß einem der Ansprüche 1-6, die zur Verwendung als Arbeitsflüssigkeit für eine Kältemaschine geeignet ist und ferner ein Kältemittelöl umfasst.

8. Verwendung der Zusammensetzung gemäß einem der Ansprüche 1-7 als alternatives Kältemittel für R410A.

9. Kältemaschine, umfassend die Zusammensetzung gemäß einem der Ansprüche 1-7 als Arbeitsflüssigkeit.

10. Verfahren zum Betreiben einer Kältemaschine, umfassend das Zirkulieren der Zusammensetzung gemäß einem der Ansprüche 1-7 als Arbeitsflüssigkeit in einer Kältemaschine.

## Revendications

1. Composition comprenant un fluide frigorigène, dans laquelle le fluide frigorigène comprend du trans-1,2-difluoroéthylène (HFO-1132(E)), du trifluoroéthylène (HFO-1123) et du 2,3,3,3-tétrafluoro-l-propène (R1234yf) dans un rapport de mélange tel que, lorsque le % en masse de HFO-1132(E) , HFO-1123 et R1234yf sur la base de leur somme dans le fluide frigorigène est respectivement représenté par x, y et z, les coordonnées (x, y, z) dans un diagramme de composition ternaire dans lequel la somme de HFO-1132(E), HFO-1123 et R1234yf est de 100 % en masse, se trouvent dans la plage d'une figure entourée par les segments de ligne GI, IA, AA', A'B, BD, DC', C'C et CG qui relient les 8 points suivants :
point G (72,0, 28,0, 0,0),
point I (72,0, 0,0, 28,0),
point A (68,6, 0,0, 31,4),
point A' (30,6, 30,0, 39,4),
point B (0,0, 58,7, 41,3),
point D (0,0, 80,4, 19,6),
point C' (19,5, 70,5, 10,0) et
point C (32,9, 67,1, 0,0),
ou sur les segments de ligne ci-dessus (excepté les points sur les segments de ligne IA, BD et CG) ;
le segment de ligne AA' est représenté par les coordonnées (x, 0,0016x - 0,9473x + 57,497, -0,0016x² - 0,0527x + 42,503),
le segment de ligne A'B est représenté par les coordonnées (x, 0,0029x² - 1,0268x + 58,7, -0,0029x² + 0,0268x + 41,3),
le segment de ligne DC' est représenté par les coordonnées (x, 0,0082x² - 0,6671x + 80,4, -0,0082x² - 0,3329x + 19,6),
le segment de ligne C'C est représenté par les coordonnées (x, 0,0067x² - 0,6034x + 79,729, -0,0067x² - 0,3966x + 20,271), et
les segments de ligne GI, IA, BD et CG sont des lignes droites.

2. Composition selon la revendication 1, dans laquelle dans le fluide frigorigène, le rapport de mélange est tel que les coordonnées (x, y, z) dans le diagramme de composition ternaire se trouvent dans la plage d'une figure entourée par les segments de ligne JP, PN, NK, KA', A'B, BD, DC', C'C et CJ qui relient les 9 points suivants :
point J (47,1, 52,9, 0,0),
point P (55,8, 42,0, 2,2),
point N (68,6, 16,3, 15,1),
point K (61,3, 5,4, 33,3),
point A' (30,6, 30,0, 39,4),
point B (0,0, 58,7, 41,3),
point D (0,0, 80,4, 19,6),
point C' (19,5, 70,5, 10,0) et
point C (32,9, 67,1, 0,0), ou sur les segments de ligne ci-dessus (excepté les points sur les segments de ligne BD et CJ) ;
le segment de ligne PN est représenté par les coordonnées (x, - 0,1135x² + 12,112x - 280,43, 0,1135x² - 13,112x + 380,43),
le segment de ligne NK est représenté par les coordonnées (x, 0,2421x² - 29,955x + 931,91, -0,2421x² + 28,955x - 831,91),
le segment de ligne KA' est représenté par les coordonnées (x, 0,0016x² - 0,9473x + 57,497, -0,0016x² - 0,0527x + 42,503),
le segment de ligne A'B est représenté par les coordonnées (x, 0,0029x² - 1,0268x + 58,7, -0,0029x² + 0,0268x + 41,3),
le segment de ligne DC' est représenté par les coordonnées (x, 0,0082x² - 0,6671x + 80,4, -0,0082x² - 0,3329x + 19,6),
le segment de ligne C'C est représenté par les coordonnées (x, 0,0067x² - 0,6034x + 79,729, -0,0067x² - 0,3966x + 20,271), et
les segments de ligne JP, BD et CJ sont des lignes droites.

3. Composition selon la revendication 1, dans laquelle dans le fluide frigorigène, le rapport de mélange est tel que les coordonnées (x, y, z) dans le diagramme de composition ternaire se trouvent dans la plage d'une figure entourée par les segments de ligne JP, PL, LM, MA', A'B, BD, DC', C'C et CJ qui relient les 9 points suivants :
point J (47,1, 52,9, 0,0),
point P (55,8, 42,0, 2,2),
point L (63,1, 31,9, 5,0),
point M (60,3, 6,2, 33,5),
point A' (30,6, 30,0, 39,4),
point B (0,0, 58,7, 41,3),
point D (0,0, 80,4, 19,6),
point C' (19,5, 70,5, 10,0) et
point C (32,9, 67,1, 0,0),
ou sur les segments de ligne ci-dessus (excepté les points sur les segments de ligne BD et CJ) ;
le segment de ligne PL est représenté par les coordonnées (x, - 0,1135x² + 12,112x - 280,43, 0,1135x² - 13,112x + 380,43)
le segment de ligne MA' est représenté par les coordonnées (x, 0,0016x² - 0,9473x + 57,497, -0,0016x² - 0,0527x + 42,503),
le segment de ligne A'B est représenté par les coordonnées (x, 0,0029x² - 1,0268x + 58,7, -0,0029x² + 0,0268x + 41,3),
le segment de ligne DC' est représenté par les coordonnées (x, 0,0082x² - 0,6671x + 80,4, -0,0082x² - 0,3329x + 19,6),
le segment de ligne C'C est représenté par les coordonnées (x, 0,0067x² - 0,6034x + 79,729, -0,0067x² - 0,3966x + 20,271), et
les segments de ligne JP, LM, BD et CJ sont des lignes droites.

4. Composition selon la revendication 1, dans laquelle dans le fluide frigorigène, le rapport de mélange est tel que les coordonnées (x, y, z) dans le diagramme de composition ternaire se trouvent dans la plage d'une figure entourée par les segments de ligne PL, LM, MA', A'B, BF, FT et TP qui relient les 7 points suivants :
point P (55,8, 42,0, 2,2),
point L (63,1, 31,9, 5,0),
point M (60,3, 6,2, 33,5),
point A' (30,6, 30,0, 39,4),
point B (0,0, 58,7, 41,3),
point F (0,0, 61,8, 38,2) et
point T (35,8, 44,9, 19,3),
ou sur les segments de ligne ci-dessus (excepté les points sur le segment de ligne BF) ;
le segment de ligne PL est représenté par les coordonnées (x, - 0,1135x² + 12,112x - 280,43, 0,1135x² - 13,112x + 380,43),
le segment de ligne MA' est représenté par les coordonnées (x, 0,0016x² - 0,9473x + 57,497, -0,0016x² - 0,0527x + 42,503),
le segment de ligne A'B est représenté par les coordonnées (x, 0,0029x² - 1,0268x + 58,7, -0,0029x² + 0,0268x + 41,3),
le segment de ligne FT est représenté par les coordonnées (x, 0,0078x² - 0,7501x + 61,8, -0,0078x² - 0,2499x + 38,2),
le segment de ligne TP est représenté par les coordonnées (x, 0,00672x² - 0,7607x + 63,525, -0,00672x² - 0,2393x + 36,475), et
les segments de ligne LM et BF sont des lignes droites.

5. Composition selon la revendication 1, dans laquelle dans le fluide frigorigène, le rapport de mélange est tel que les coordonnées (x, y, z) dans le diagramme de composition ternaire se trouvent dans la plage d'une figure entourée par les segments de ligne PL, LQ, QR et RP qui relient les 4 points suivants :
point P (55,8, 42,0, 2,2),
point L (63,1, 31,9, 5,0),
point Q (62,8, 29,6, 7,6) et
point R (49,8, 42,3, 7,9),
ou sur les segments de ligne ci-dessus ;
le segment de ligne PL est représenté par les coordonnées (x, - 0,1135x² + 12,112x - 280,43, 0,1135x² - 13,112x + 380,43),
le segment de ligne RP est représenté par les coordonnées (x, 0,00672x² - 0,7607x + 63,525, -0,00672x² - 0,2393x + 36,475), et les segments de ligne LQ et QR sont des lignes droites.

6. Composition selon la revendication 1, dans laquelle dans le fluide frigorigène, le rapport de mélange est tel que les coordonnées (x, y, z) dans le diagramme de composition ternaire se trouvent dans la plage d'une figure entourée par les segments de ligne SM, MA', A'B, BF, FT et TS qui relient les 6 points suivants :
point S (62,6, 28,3, 9,1),
point M (60,3, 6,2, 33,5),
point A' (30,6, 30,0, 39,4),
point B (0,0, 58,7, 41,3),
point F (0,0, 61,8, 38,2) et
point T (35,8, 44,9, 19,3),
ou sur les segments de ligne ci-dessus,
le segment de ligne MA' est représenté par les coordonnées (x, 0,0016x² - 0,9473x + 57,497, -0,0016x² - 0,0527x + 42,503),
le segment de ligne A'B est représenté par les coordonnées (x, 0,0029x² - 1,0268x + 58,7, -0,0029x² + 0,0268x + 41,3),
le segment de ligne FT est représenté par les coordonnées (x, 0,0078x² - 0,7501x + 61,8, -0,0078x² - 0,2499x + 38,2),
le segment de ligne TS est représenté par les coordonnées (x, 0,0017x² - 0,7869x + 70,888, -0,0017x² - 0,2131x + 29,112), et
les segments de ligne SM et BF sont des lignes droites.

7. Composition selon l'une quelconque des revendications 1-6, qui convient pour une utilisation en tant que fluide de travail dans une machine frigorifique et comprend en outre une huile de réfrigération.

8. Utilisation d'une composition selon l'une quelconque des revendications 1-7 en tant que fluide frigorigène alternatif pour R410A.

9. Machine frigorifique comprenant la composition selon l'une quelconque des revendications 1-7 en tant que fluide de travail.

10. Procédé de fonctionnement d'une machine frigorifique, comprenant la circulation de la composition selon l'une quelconque des revendications 1-7 en tant que fluide de travail dans une machine frigorifique.
